(19) Europäisches Patentamt
European Patent Office
Office européen des brevets

(11) **EP 4 386 891 A1**

(12) **EUROPEAN PATENT APPLICATION**

(43) Date of publication:
**19.06.2024 Bulletin 2024/25**

(21) Application number: **23211937.0**

(22) Date of filing: **24.11.2023**

(51) International Patent Classification (IPC):
*H01M 4/133* (2010.01)      *H01M 4/134* (2010.01)
*H01M 4/38* (2006.01)       *H01M 4/587* (2010.01)
*H01M 10/052* (2010.01)     *H01M 10/0525* (2010.01)
*H01M 10/0562* (2010.01)    *H01M 10/42* (2006.01)
*H01M 4/36* (2006.01)

(52) Cooperative Patent Classification (CPC):
**H01M 10/0562; H01M 4/133; H01M 4/134;
H01M 4/364; H01M 4/382; H01M 4/587;
H01M 10/052; H01M 10/0525; H01M 10/4235;**
H01M 2300/0068

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **15.12.2022 KR 20220176246
21.11.2023 KR 20230162709**

(71) Applicants:
• **Samsung Electronics Co., Ltd.
Suwon-si, Gyeonggi-do 16677 (KR)**
• **Yonsei University, University-Industry
Foundation(UIF).
Seoul 03722 (KR)**

(72) Inventors:
• **KIM, Kyounghwan
16678 Suwon-si (KR)**
• **PARK, Jonghyeok
03722 Seodaemun-gu (KR)**
• **LEE, Yonggun
16678 Suwon-si (KR)**
• **KIM, Kwanghee
03722 Seodaemun-gu (KR)**
• **KIM, Jusik
16678 Suwon-si (KR)**

(74) Representative: **Elkington and Fife LLP
Prospect House
8 Pembroke Road
Sevenoaks, Kent TN13 1XR (GB)**

(54) **ANODE-SOLID ELECTROLYTE SUB-ASSEMBLY FOR ALL-SOLID SECONDARY BATTERY, ALL-SOLID SECONDARY BATTERY INCLUDING THE SAME, AND PREPARATION METHOD THEREOF**

(57)    An anode-solid electrolyte sub-assembly for an all-solid secondary battery, the anode-solid electrolyte sub-assembly including: an anode current collector; a mixed ionic-electronic conductor structure disposed on a first side of the anode current collector, the mixed ionic-electronic conductor structure containing a mixed ionic-electronic conductor, and having a plurality of openings extending along a thickness direction; wherein the plurality of openings has a structure in which at least one end is open; an interlayer disposed on the mixed ionic-electronic conductor structure and opposite the anode current collector; and a solid electrolyte disposed on the interlayer and opposite the mixed ionic-electronic conductor, wherein the interlayer includes an interlayer material.

FIG. 1A

**Description**

FIELD OF THE INVENTION

The disclosure relates to an anode-solid electrolyte sub-assembly for an all-solid secondary battery, an all-solid secondary battery including the same, and a method of preparing the all-solid secondary battery.

BACKGROUND OF THE INVENTION

Batteries using a solid electrolyte, by not using flammable organic solvents, may significantly decrease the risk of a fire or explosion even in the event of a short-circuit. Therefore, such an all-solid secondary battery may be significantly safer than lithium-ion batteries using a liquid electrolyte.
To increase the energy density of such a solid-state secondary battery, lithium may be used as an anode active material. In particular, lithium metal is known to have a specific capacity (capacity per unit mass) about 10 times that of graphite, which is generally used as anode active material. Accordingly, by using lithium as an anode active material, it is possible to increase the capacity of an all-solid secondary battery while decreasing its thickness.
To increase the energy density of an all-solid secondary battery, a precipitation-type anode is suggested, which is formed by inserting a material capable of forming an alloy or a compound with lithium between an anode and solid electrolyte and serves as a protection layer for lithium metal. However, there remains a need for an improved anode.

SUMMARY OF THE INVENTION

Provided is an anode-solid electrolyte sub-assembly for an all-solid secondary battery, which inhibits a thickness change and reduces an internal stress change in a battery after charging and discharging.
Provided are an all-solid secondary battery having improved cell performance by including the above-described anode-solid electrolyte sub-assembly, and a method of preparing the all-solid secondary battery.
Additional aspects will be set forth in part in the description which follows and, in part, will be apparent from the description, or may be learned by practice of the presented embodiments of the disclosure.
According to an aspect of the disclosure, an anode-solid electrolyte sub-assembly for an all-solid secondary battery includes:

an anode current collector;
a mixed ionic-electronic conductor (MIEC) structure disposed on a first side of the anode current collector, the mixed ionic-electronic conductor structure containing a mixed ionic-electronic conductor, and having a plurality of openings extending along a thickness direction,
wherein the plurality of openings has a structure in which at least one end is open;
an interlayer disposed on the mixed ionic-electronic conductor structure and opposite the anode current collector; and
a solid electrolyte disposed on the interlayer and opposite the mixed ionic-electronic conductor structure,
wherein the interlayer includes an interlayer material, the interlayer material containing
a carbon anode active material,
lithium,
a mixture of
the carbon anode active material, and
a second metal, a metalloid, or a combination thereof,
a composite of
the carbon anode active material, and
the second metal, the metalloid, or a combination thereof, or
a combination thereof.

The plurality of openings having the structure in which at least one end is open may include a plurality of open pores providing an empty space.
The plurality of openings having the structure in which at least one end is open may have a shape including a vertical tube shape extending along the thickness direction.
The plurality of openings may include a plurality of tubules, each tubule having a cross-sectional width of less than 300 nanometers (nm).
A shape of openings may have a tube shape, a straight-line shape, a cross shape, a circular shape, an oval shape, a triangular shape, a rectangular shape, a pentagonal shape, a hexagonal shape, a stripe shape, a mesh shape, a honeycomb shape, or a combination thereof.

At least a portion of the openings may contain the interlayer material.

A ratio of a thickness of the interlayer material and a thickness of the interlayer disposed on the MIEC structure may be about 1:3 to about 1:20.

The MIEC structure may have a porosity of 60% or greater, and the MIEC structure may have an average pore size of about 5 nm to about 200 nm. In addition, the MIEC structure may have a thickness of about 1 $\mu$m to about 100 $\mu$m.

The MIEC may contain a carbon material, silicon (Si), aluminum (Al), titanium nitride (TiN), titanium carbide (TiC), tantalum nitride, tungsten nitride, iron nitride, nickel (Ni), and niobium oxynitride, or a combination thereof; a lithiated compound of the carbon material, silicon (Si), aluminum (Al), titanium nitride (TiN), titanium carbide (TiC), tantalum nitride, tungsten nitride, iron nitride, nickel (Ni), and niobium oxynitride, or a combination thereof; or a combination thereof.

The MIEC may include a material including titanium nitride (TiN), titanium carbide (TiC), $Ta_3N_5$, $Fe_xN$ ($2 \leq x \leq 4$), $W_2N$, $Nb_aO_xN_y$ ($0 \leq a \leq 2$, $0 \leq x \leq 2$, and $0 \leq y \leq 2$), or a combination thereof; a lithiated compound of the material; a mixture of the material with a carbon material; a composite of the material and the carbon material; or a combination thereof.

The plurality of open pores may contain a first metal material, and the first metal material may be lithium, a lithium-first metal alloy, or a combination.

The first metal may be tin (Sn), indium (In), silicon (Si), gallium (Ga), aluminum (Al), titanium (Ti), zirconium (Zr), niobium (Nb), germanium (Ge), antimony (Sb), bismuth (Bi), zinc (Zn), gold (Au), platinum (Pt), palladium (Pd), nickel (Ni), iron (Fe), cobalt (Co), chromium (Cr), magnesium (Mg), cesium (Cs), cerium (Ce), molybdenum (Mo), silver (Ag), sodium (Na), potassium (K), calcium (Ca), yttrium (Y), tantalum (Ta), hafnium (Hf), barium (Ba), vanadium (V), strontium (Sr), tellurium (Te), lanthanum (La), or a combination thereof. The first metal material may be a Li-Ag alloy, a Li-Au alloy, a Li-Al alloy, a Li-Sn alloy, a Li-In alloy, a Li-Zn alloy, a Li-Ge alloy, a Li-Si alloy, a Li-Sb alloy, a Li-Bi alloy, a Li-Ga alloy, a Li-Na alloy, a Li-K alloy, a Li-Te alloy, a Li-Mg alloy, a Li-Mo alloy, a Li-Sn-Bi alloy, a Li-Sn-Ag alloy, a Li-Sn-Na alloy, a Li-Sn-K alloy, a Li-Sn-Ca alloy, a Li-Te-Ag alloy, a Li-Sb-Ag alloy, a Li-Sn-Sb alloy, a Li-Sn-V alloy, a Li-Sn-Ni alloy, a Li-Sn-Cu alloy, a Li-Sn-Zn alloy, a Li-Sn-Ga alloy, a Li-Sn-Ge alloy, a Li-Sn-Sr alloy, a Li-Sn-Y alloy, a Li-Sn-Ba alloy, a Li-Sn-Au alloy, a Li-Sn-La alloy, a Li-Al-Ga alloy, a Li-Mg-Sn alloy, a Li-Mg-Al alloy, a Li-Mg-Si alloy, a Li-Mg-Zn alloy, a Li-Mg-Ga alloy, a Li-Mg-Ag alloy, or a combination thereof.

The carbon anode active material may include an amorphous carbon, and the amorphous carbon may be carbon black (CB), acetylene black (AB), furnace black (FB), Ketjen black (KB), graphene, carbon nanotubes, carbon nanofibers, or a combination thereof.

To the vertical open pores, lithium precipitated as a result of lithium ions migrating from the cathode and passing through the interlayer upon charging may be disposed.

A first metal thin film may be further disposed between the MIEC structure and the interlayer.

A second metal thin film may be further disposed between the interlayer and the solid electrolyte.

The interlayer may have an average pore size of about 0.1 nm to about 100 nm, and the MIEC structure may have a larger average pore size than an average pore size of the interlayer.

The MIEC may contain vertical nanotube shapes, the vertical nanotubes may have an average diameter of about 60 nm to about 120 nm, and the vertical nanotubes may have an average length of about 1 $\mu$m to about 100 $\mu$m. In addition, the pitch between pores in the vertical nanotubes may be less than 300 nm.

According to another aspect of the disclosure, an all-solid secondary battery includes:

a cathode; and
the above-described anode-solid electrolyte sub-assembly disposed on the cathode,
wherein the solid electrolyte is disposed between the cathode and the anode.

The solid electrolyte may include an oxide solid electrolyte, a sulfide electrolyte, a polymer electrolyte, or a combination thereof.

The sulfide solid electrolyte may include a compound having an argyrodite-type crystal structure.

The all-solid secondary battery may show a cell thickness change of 20 percent (%) or less and an internal stress change of 0.5 megapascal (MPa) or less.

The oxide solid electrolyte may be an oxide represented by Formula 3:

$$\text{Formula 3} \qquad Li_{3+x}La_3Zr_{2-a}M_aO_{12}$$

in Formula 3, M may be Al, Ga, In, Si, Ge, Sn, Sb, Bi, Sc, Y, Ti, Hf, V, Nb, Ta, W, or a combination thereof, and x may be a number of 1 to 10, and $0 \leq a < 2$.

The polymer electrolyte may include a polyethylene oxide, a polypropylene oxide, polystyrene (PS), a polyphosphazene, a polysiloxane, polyvinylidene fluoride-co-hexafluoropropylene (PVDF-HFP), polyacrylonitrile (PAN), or a combination thereof.

According to another aspect of the disclosure, a method of preparing an all-solid secondary battery includes:

providing a mixed ionic-electronic conductor structure, the mixed ionic-electronic conductor structure containing a mixed ionic-electronic conductor,
and having a plurality of openings extending along a thickness direction, wherein the plurality of openings has a structure in which at least one end is open;
disposing an interlayer on the mixed ionic-electronic conductor structure to prepare the mixed ionic-electronic conductor structure with the interlayer disposed thereon;
disposing the mixed ionic-electronic conductor structure with the interlayer disposed thereon on an anode current collector to prepare a lam inate,
wherein the mixed ionic-electronic conductor structure is between the interlayer and the anode current collector;
disposing the solid electrolyte on the interlayer of the laminate and opposite the mixed ionic-electronic conductor structure to form an anode-solid electrolyte sub-assembly; and
disposing a cathode on the solid electrolyte of the anode-solid electrolyte sub-assembly and opposite the anode to prepare the all-solid secondary battery.

The disposing of the interlayer on the MIEC structure to prepare the MIEC structure with the interlayer disposed thereon may include a transfer or coating method.

Further disposing of a metal film between the interlayer and the solid electrolyte may be further included.

According to another aspect of the disclosure, a method of preparing an all-solid secondary battery includes:
preparing a mixed ionic-electronic conductor (MIEC) structure which contains a MIEC and has a plurality of openings extending along a thickness direction and having a structure in which at least one end is open;

preparing a solid electrolyte/interlayer laminate by disposing an interlayer on a solid electrolyte;
preparing a solid electrolyte/interlayer/MIEC structure laminate by disposing the MIEC structure on the interlayer of the solid electrolyte/interlayer laminate and opposite the solid electrolyte;
forming an anode-solid electrolyte sub-assembly by disposing an anode current collector on the MIEC structure of the solid electrolyte/interlayer/MIEC structure laminate and opposite the interlayer; and
disposing a cathode on the solid electrolyte of the anode-solid electrolyte sub-assembly and opposite the anode to prepare the all-solid secondary battery.

The disposing of an interlayer on the MIEC structure to prepare the MIEC structure with the interlayer disposed thereon may include a transfer method or a coating method. In addition, further disposition of a metal film between the interlayer and the solid electrolyte may be further included.

BRIEF DESCRIPTION OF THE DRAWINGS

The above and other aspects, features, and advantages of certain embodiments of the disclosure will be more apparent from the following description taken in conjunction with the accompanying drawings, in which:

FIGS. 1A to 1C are each a diagram of an embodiment describing a structure of an anode-solid electrolyte sub-assembly;
FIG. 1D is a diagram showing a lithium precipitated state in pores of a mixed ionic-electronic conductor structure after charging in the anode-solid electrolyte sub-assembly depicted in FIG. 1B;
FIG. 1E is a diagram of an embodiment describing a structure of an all-solid secondary battery having an anode-solid electrolyte sub-assembly;
FIGS. 2A and 2B are each a schematic diagram of an embodiment showing charging of an all-solid secondary battery;
FIGS. 3A to 3D are each a graph of specific capacity (milliampere-hours per gram, $mAh \cdot g^{-1}$) vs. voltage (Volts, V), showing the results of evaluation of voltage changes according to specific capacity after charging and discharging of all-solid secondary batteries of Example 1, Comparative Example 1, Comparative Example 2, and Comparative Example 3;
FIGS. 4A and 4B are each a graph of time (seconds, s) vs. voltage (V) and thickness change (percent, %), showing cell thickness changes after a charge-discharge test of all-solid secondary batteries of Example 1 and Comparative Example 1;
FIGS. 4C and 4D are each a graph of time (s) vs. voltage (V) and pressure (megapascals, MPa), showing an internal stress change after a charge-discharge test of all-solid secondary batteries of Example 1 and Comparative Example 1;

FIG. 5 is a graph of capacity per unit area (milliampere. hours per square centimeter, mAh·cm$^{-2}$) vs. voltage (V), showing a voltage change according to capacity density after charging and discharging of an all-solid secondary battery of Example 2;

FIG. 6 is a graph of cycle number (cycle) vs. capacity per unit area (mAh·g$^{-1}$), showing capacity retention ratio characteristics of an all-solid secondary battery of Example 2; and

FIGS. 7A and 7B are each a scanning electron micrograph, showing scanning electron microscopy (SEM) analysis of TiN nanotubes according to Preparation Example 1.

## DETAILED DESCRIPTION OF THE EMBODIMENTS

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain various aspects. As used herein, the term "and/or" includes any and all combinations of one or more of the associated listed items. Expressions such as "at least one of," when preceding a list of elements, modify the entire list of elements and do not modify the individual elements of the list.

It will be understood that when an element is referred to as being "on" another element, it can be directly on the other element or intervening elements may be present therebetween. In contrast, when an element is referred to as being "directly on" another element, there are no intervening elements present.

It will be understood that, although the terms "first," "second," "third" etc. may be used herein to describe various elements, components, regions, layers and/or sections, these elements, components, regions, layers and/or sections should not be limited by these terms. These terms are only used to distinguish one element, component, region, layer or section from another element, component, region, layer or section. Thus, "a first element," "component," "region," "layer" or "section" discussed below could be termed a second element, component, region, layer or section without departing from the teachings herein.

The terminology used herein is for the purpose of describing particular embodiments only and is not intended to be limiting. As used herein, "a", "an," "the," and "at least one" do not denote a limitation of quantity, and are intended to include both the singular and plural, unless the context clearly indicates otherwise. For example, "an element" has the same meaning as "at least one element," unless the context clearly indicates otherwise. "At least one" is not to be construed as limiting "a" or "an." "Or" means "and/or." As used herein, the term "and/or" includes any and all combinations of one or more of the associated listed items. It will be further understood that the terms "comprises" and/or "comprising," or "includes" and/or "including" when used in this specification, specify the presence of stated features, regions, integers, steps, operations, elements, and/or components, but do not preclude the presence or addition of one or more other features, regions, integers, steps, operations, elements, components, and/or groups thereof.

Furthermore, relative terms, such as "lower" or "bottom" and "upper" or "top," may be used herein to describe one element's relationship to another element as illustrated in the Figures. It will be understood that relative terms are intended to encompass different orientations of the device in addition to the orientation depicted in the Figures. For example, if the device in one of the figures is turned over, elements described as being on the "lower" side of other elements would then be oriented on "upper" sides of the other elements. The term "lower," can therefore, encompasses both an orientation of "lower" and "upper," depending on the particular orientation of the figure. Similarly, if the device in one of the figures is turned over, elements described as "below" or "beneath" other elements would then be oriented "above" the other elements. The terms "below" or "beneath" can, therefore, encompass both an orientation of above and below.

"About" or "approximately" as used herein is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" can mean within one or more standard deviations, or within $\pm$ 30%, 20%, 10% or 5% of the stated value. Endpoints of ranges may each be independently selected.

Unless otherwise defined, all terms (including technical and scientific terms) used herein have the same meaning as commonly understood by one of ordinary skill in the art to which this disclosure belongs. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

An expression that "metal" as used herein includes metal, metalloid, and a combination thereof.

Embodiments are described herein with reference to cross section illustrations that are schematic illustrations of idealized embodiments. As such, variations from the shapes of the illustrations as a result, for example, of manufacturing techniques and/or tolerances, are to be expected. Thus, embodiments described herein should not be construed as limited to the particular shapes of regions as illustrated herein but are to include deviations in shapes that result, for example, from manufacturing. For example, a region illustrated or described as flat may, typically, have rough and/or nonlinear features. Moreover, sharp angles that are illustrated may be rounded. Thus, the regions illustrated in the figures are schematic in nature and their shapes are not intended to illustrate the precise shape of a region and are not intended to limit the scope of the present claims.

A composite of a carbon anode active material and a second metal is a material that is a composite material of a carbon anode active material and a second metal. After two or more types of materials are composited, each material physically and chemically becomes the original material. It refers to a material made to have better performance than the original material while maintaining its appearance. This is different from a mixture of carbon anode active material and a second metal.

Hereinafter, an anode-solid electrolyte sub-assembly for an all-solid secondary battery according to an embodiment, an all-solid secondary battery including the same, and a method of preparing the all-solid secondary battery will be described in greater detail with reference to the accompanied drawings. In the drawings, like reference numerals may refer to like elements, and the thicknesses or sizes of each element may be exaggerated for convenience of description. Further, the examples described below are provided for illustrative purposes only, and various modifications may be possible from these examples.

A precipitation-type anode is suggested, which is formed by inserting a material that alloys with lithium or forms a compound with lithium between the anode and solid electrolyte of an all-solid secondary battery and serves as a protection layer for a lithium metal layer. However, in such an all-solid secondary battery, the movement of lithium between the anode current collector and the protection layer upon charging may cause a change in cell thickness and as a result, cause a strain and an internal stress inside the battery, which negatively affect the operating characteristics of the battery. Thus, in such an all-solid secondary battery, changes in the thickness of the anode caused by lithium precipitation may induce a stress and strain inside the battery, causing operating characteristics of the battery to deteriorate. In this context, there is a need for an anode structure, which prevents a change in the thickness or pressure of a battery even when lithium is accumulated upon charging, and which does not give rise to an internal stress and is strain-free. As a lithium reservoir, an anode using a vertical tube-type mixed ionic-electronic conductor (MIEC) reservoir is suggested. However, use of such an anode may cause an electrical current to crowd at tip portions of a vertical tube-type reservoir that form an interface with a solid electrolyte, and thus induce formation of lithium dendrites at the tip portions. As a result, a capacity of the battery may deteriorate, or a short-circuit may occur. To address the aforementioned issues, a method of forming an electronic and Li-ion insulator (ELI) layer on a MIEC reservoir is suggested. However, use of such an ELI layer necessitates the application of a vacuum deposition process, which increases the processing time and costs. Since an interfacial insulation layer should be formed and the interfacial insulation layer acts a resistance film, causing high-rate characteristics of the battery to deteriorate, there is a need for improvement in this respect.

In this context, to address the aforementioned issues, the present inventors provide an anode-solid electrolyte sub-assembly for an all-solid secondary battery, which shows no change in internal stress, by using, as a lithium reservoir, an MIEC structure having a plurality of openings (e.g., opening portions) extending along a thickness direction and having a structure in which at least one end is open, and also by forming an interlayer capable of facilitating the distribution of ions and an electrical current on the MIEC structure.

An anode-solid electrolyte sub-assembly according to an embodiment includes:

an anode current collector;
an MIEC structure disposed on a first side of the anode current collector, the MIEC structure containing a MIEC, and having a plurality of openings extending along a thickness direction, wherein the plurality of openings has a structure in which at least one end is open;
an interlayer disposed on the MIEC structure and opposite the anode current collector; and
a solid electrolyte disposed on the interlayer and opposite the MIEC,
wherein the interlayer includes an interlayer material, the interlayer material containing a carbon anode active material,
lithium,
a mixture of the carbon anode active material, and a second metal, a metalloid, or a combination thereof,
a composite of the carbon anode active material, and the second metal, the metalloid, or a combination thereof, or
a combination thereof.

The plurality of opening portions may have the structure in which one end is open or may have the structure in which both ends are open. A shape of the opening portion may be a vertical tube shape, a straight-line shape, a cross shape, a circular shape, an oval shape, a triangular shape, a rectangular shape, a pentagonal shape, a hexagonal shape, a stripe shape, a mesh shape, a honeycomb shape, or a combination thereof.

The plurality of opening portions having the structure in which at least one end is open may have vertical tube shapes extending along a thickness direction. Inside the opening portions, e.g., inside the tubes, there may be a space for storing lithium, and this space may include a plurality of open pores. As used herein, the term "open pore" refers to a pore having an exposed interior, e.g., exposed to the inside of the tube. A shape of a horizontal cross-section of the pore is not limited to any particular shape and may have, for example, a circular shape, an oval shape, a triangular shape, a square shape, a rectangular shape, or a hexagonal shape.

The plurality of opening portions having a structure in which at least one end is open may include a plurality of open pores providing a space for storing lithium. Here, the open pores may represent an empty space inside the tubes of the vertical tubes.

The plurality of opening portions, e.g., a plurality of open pores, may include a plurality of tubules, each tubule having a cross-sectional width of less than 300 nanometers (nm). In addition, the tubules may have, for example, a honeycomb structure.

In at least a portion of the opening portions, e.g., at least a portion of the vertical tubes, an interlayer material may be included.

The MIEC structure may have, for example, vertical nanotube shapes.

An anode-solid electrolyte sub-assembly according to an embodiment may prevent an electrical current from being concentrated at tube tips of the vertical nanotube structure to ensure an even distribution of the electrical current, to thereby prevent the formation of lithium dendrites at the tube tips and allow the cell to operate normally.

The MIEC structure does not store or release lithium metal, nor react with lithium, however, a plurality of opening portions, e.g., a plurality of open pores, extending along the thickness direction in the MIEC structure may store lithium metal, and releasing lithium metal from the plurality of open pores may facilitate movement of lithium.

The MIEC structure may form a conductive path defined by at least a portion of the pores, and the pores may have an average pore size of about 5 nm to about 200 nm, about 50 nm to about 150 nm, or about 60 nm to about 120 nm. The MIEC structure may have a thickness of about 1 micrometer ($\mu$m) to about 100 $\mu$m, about 3 $\mu$m to about 80 $\mu$m, about 5 $\mu$m to about 60 $\mu$m, or about 15 $\mu$m to about 40 $\mu$m.

As used herein, the term "average pore size" refers to an average diameter of a pore if the pore is spherical, and for a pore that is non-spherical, said term refers to an average major axis length of the pore. The average diameter, average particle diameter and average major axis length refer to an average value of measured diameter, an average value of measured particle diameter, and an average value of measured major axis length, respectively. The average diameter, average particle diameter and average major axis length may be evaluated through image analysis using a scanning electron microscope or a transmission electron microscope. For example, the average particle diameter may be an average particle diameter observed by scanning electron microscopy (SEM), and may be calculated as an average value of diameters of approximately 10-30 particles measured using SEM images.

In a case in which the MIEC structure has a vertical tube shape extending along the thickness direction, the average pore size may represent an average inner diameter of a tube.

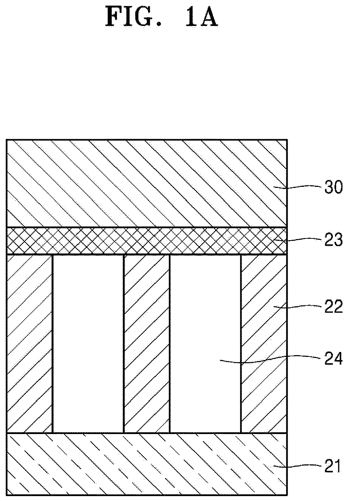

FIGS. 1A to 1D are diagrams describing a structure of an anode-solid electrolyte sub-assembly according to an embodiment.

According to an embodiment, an anode-solid electrolyte sub-assembly as shown in FIG. 1A may include an MIEC (mixed ionic-electronic conductor) structure 22 containing an MIEC having a plurality of vertical open pores 24 extending along a thickness direction on an anode current collector 21. During charging and/or discharging of the battery, lithium may be moved and/or precipitated into the open pores 24.

An interlayer 23 may be disposed on the MIEC structure 22, and a solid electrolyte 30 may be disposed on the interlayer 23.

The MIEC structure may include a material that does not store and/or release lithium metal, and having the ability to withstand a mechanical stress induced by lithium metal. In addition, the MIEC structure may be formed of any suitable material capable of forming vertical open pores. For example, the MIEC may contain a carbon material, silicon (Si), aluminum (Al), titanium nitride (TiN), titanium carbide (TiC), tantalum nitride, tungsten nitride, iron nitride, nickel (Ni), niobium oxynitride, or a combination thereof; a lithiated compound of the carbon material, silicon (Si), aluminum (Al), titanium nitride (TiN), titanium carbide (TiC), tantalum nitride, tungsten nitride, iron nitride, nickel (Ni), niobium oxynitride, or a combination thereof; or a combination thereof.

The MIEC may contain a material including titanium nitride (TiN), titanium carbide (TiC), $Ta_3N_5$, $Fe_xN$ ($2 \leq x \leq 4$), $W_2N$, $Nb_aO_xN_y$ ($0 \leq a \leq 2$, $0 \leq x \leq 2$, and $0 \leq y \leq 2$) or a combination thereof; a lithiated compound of the material; a mixture of the material and a carbon material; a composite of the material and the carbon material; or a combination thereof.

$Fe_xN$ ($2 \leq x \leq 4$) may be, for example, $Fe_2N$ or FesN. $Nb_aO_xN_y$ ($0 \leq a \leq 2$, $0 \leq x \leq 2$, and $0 \leq y \leq 2$) may be, for example, $Nb_2N_{0.88}O_{0.12}$.

Among MIEC structure materials, titanium nitride (TiN) is a material that is thermodynamically and electrochemically stable with respect to lithium, and when in contact with lithium, does not cause reactions or form a solid electrolyte interphase (SEI). In particular, titanium nitride has extremely excellent mechanical properties.

According to another embodiment, the MIEC structure may comprise the carbon material, and the MIEC structure comprising the carbon material may include a mixture of graphite and amorphous carbon. As a result, the phase boundary between lithium metal and lithiated carbon may have a spatially varying free volume between amorphous carbon clusters, and this may also increase diffusion velocity.

According to another embodiment, the MIEC structure may contain a mixture of TiN, graphite and amorphous carbon.

The MIEC structure according to another embodiment may comprise lithiated carbon and a lithium-friendly (e.g., lithiophilic) coating film ($Li_2O$).

A porosity of the MIEC structure may be selected within a range capable of retaining the frame of the MIEC structure and may be about 60% or greater, about 60% to about 90%, about 65% to about 85%, or about 70% to about 80%. Here, % represents volume percent (vol%). The porosity may be evaluated using an image analysis using scanning electron microscopy analysis. When the porosity is within the above range, lithium may be stored into the open pores upon charging.

A pitch between the open pores in the MIEC structure may represent a distance between centers of two adjacent pores. More specifically, in the present specification, in the MIEC structure containing a plurality of pores (e.g., open pores), including a first pore and a second pore located adjacent thereto, the pitch between pores (i.e., pore pitch) refers to a distance between a center of the first pore and a center of the second pore.

The pore pitch may be measured using a pore size evaluation method, and may be measured using, for example, a scanning electron microscope (SEM). The pitch between pores is identical to the width (distance) between adjacent tubes among vertical tubes, and for example, may be less than about 300 nm. If the pitch between open pores is excessively large, it may be difficult to provide an effective conductive path.

In an embodiment, a thickness of a wall of the nanotube may be from about 1 nm to about 30 nm, and a height of the nanotube may be about 1 $\mu$m to about 20 $\mu$m, for example, about 10 $\mu$m.

The MIEC structure may be, for example, a TiN vertical tube (hereinafter referred to as vertical nanotube) having vertical open pores. Vertical nanotubes may have a three-dimensional structure and may be surface-treated. A lithium-friendly coating film may be formed by a surface-treatment, thus increasing electronic and ionic conductance between MIECs. The lithium-friendly coating film may be, for example, a zinc oxide or $Al_2O_3$-containing coating film disposed on surfaces of the open pores. A thickness of the coating film may be, for example, about 0.5 nm to about 5 nm, about 1 nm to about 3 nm, or about 1 nm. Formation of such a coating film may increase the wettability of Li metal with respect to MIECs. The zinc oxide-coating film or the $Al_2O_3$-coating film may be formed by, for example, an atomic layer deposition method.

For example, the vertical nanotubes may be fabricated by various methods such as an anodic oxidation method, a growth process, and the like.

An aspect ratio of the vertical nanotubes may be about 10 or greater, or about 20 or greater. The aspect ratio of the vertical nanotubes may be, for example, about 10 to about 100,000, about 10 to about 80,000, about 10 to about 50,000, about 10 to about 10,000, about 10 to about 5,000, about 100 to 1,000, about 200 to about 800, or about 300 to about 700. The aspect ratio of a vertical nanotube refers to, for example, a ratio of a length of a major axis crossing a center of the vertical nanotube, and a length of a minor axis crossing the center of the vertical nanotube and perpendicular to the major axis, e.g., diameter of the vertical nanotube.

The vertical nanotubes may have an average diameter of about 60 nm to about 120 nm, or about 90 nm to about 110 nm.

The vertical nanotubes may have an average length of about 1 $\mu$m to about 100 $\mu$m, about 3 $\mu$m to about 80 $\mu$m, about 5 $\mu$m to about 60 $\mu$m, or about 15 $\mu$m to about 40 $\mu$m. As the average length of the vertical nanotubes increases, the internal resistance of the anode may decrease. Too short an average length of the vertical nanotubes may decrease the capacity of the battery.

The average diameter and average length of the vertical tubes may be evaluated using scanning electron microscopy or laser diffraction analysis.

The vertical nanotubes may include, for example, a nanotube primary structure, a nanotube secondary structure formed by aggregation of a plurality of nanotube primary particles, or a combination thereof.

The nanotube primary structure may be a single nanotube unit. Further, the nanotube secondary structure may be a structure in which nanotube primary structures are wholly or partially aggregated into a bundle-type or a rope-type. The nanotube secondary structure may include, for example, a bundle-type nanotube, a rope-type nanotube, or a combination thereof. An average diameter and/or average length of the nanotube secondary structure may be measured by laser diffraction or scanning electron microscopy.

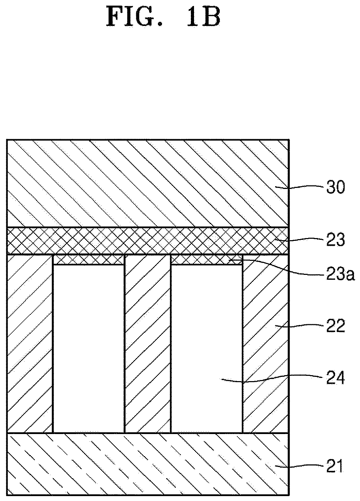

The anode-solid electrolyte sub-assembly depicted in FIG. 1B may be identical to the anode-solid electrolyte sub-assembly depicted in FIG. 1A, except that it includes a first interlayer 23a formed by introduction of an interlayer material into at least a portion of a plurality of vertical open pores 24.

The first interlayer 23a, as shown in FIG. 1B, may be formed as the interlayer material and provided on an upper end of vertical open pores 24 provided in the MIEC structure 22, while disposing the interlayer 23 on the MIEC structure 22.

The first interlayer 23a may have the same composition as the interlayer 23, or a different composition from the interlayer 23. In FIG. 1B, the interlayer 23 and the first interlayer 23a are illustrated as two distinguishable layers for convenience, but if they have the same composition, the interlayer 23 and the first interlayer 23a may not be separate layers.

The first interlayer 23a fills the pores to a depth of about 0.1 $\mu$m to about 2 $\mu$m from the top of the MIEC structures, and as such may have, at a cross-section, a partially alternating structure at the interface between the MIEC structure and the interlayer. Here, the depth refers to the depth to which the interlayer material penetrates into the tube, which is the MIEC structure.

A thickness ratio of the interlayer 23 and the first interlayer 23a formed on the MIEC structures is not particularly limited, but may be about 3:1 to about 20:1, about 4:1 to about 15:1, or about 5:1 to about 8:1, for example. Within the aforementioned thickness ratios, a bonding strength between the MIEC structure and the interlayer may be excellent, and an all-solid secondary battery having excellent charge-discharge characteristics may be prepared.

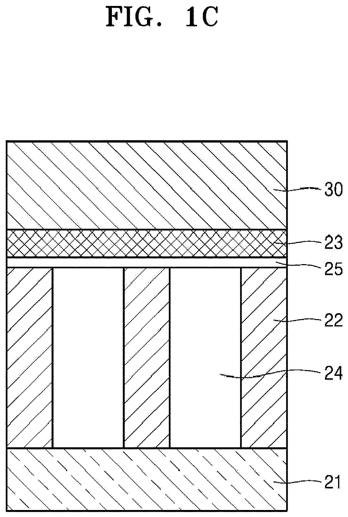

The anode-solid electrolyte sub-assembly according to another embodiment, as shown in FIG. 1C, may have a structure that further includes a first metal thin film (e.g., metal film) 25 between MIEC structure 22 and an interlayer 23. A second metal thin film (not shown) is disposed between an interlayer 23 and a solid electrolyte 30. The metal thin film may have a thickness, for example, of about 0.1 nm to about 100 nm. Formation of the metal thin film having a thickness in the aforementioned range may further improve charge-discharge characteristics of an all-solid secondary battery.

The metal thin film may be further formed as a precipitation layer during the process of charging the all-solid secondary battery, or during the process of disposing (e.g., contacting, or bonding) an anode current collector on an interlayer, or both.

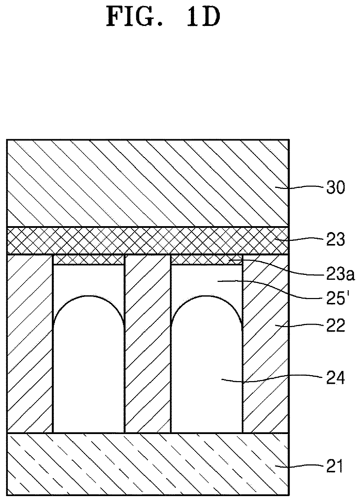

FIG. 1D shows that a portion of open pores 24 in the anode-solid electrolyte sub-assembly depicted in FIG. 1B is filled with lithium (25') precipitated as a result of lithium ions migrating from the cathode and passing through the interlayer 23 upon charging. As shown in FIG. 1D, lithium may be precipitated and stored in a greater amount along the walls of the vertical tube than in the center of the vertical tube. Lithium may be precipitated as a result of lithium ions migrating from the cathode and passing through a first anode active material layer upon charging.

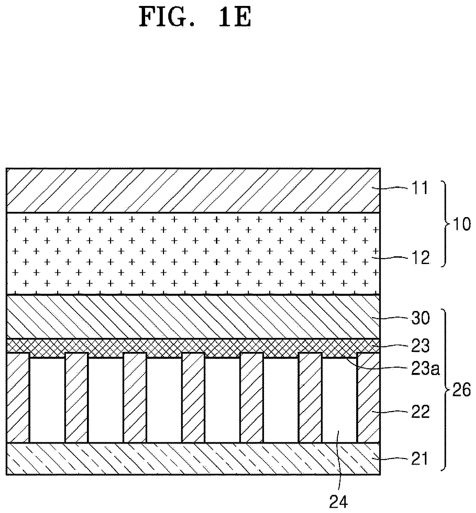

FIG. 1E is a diagram describing a structure of an all-solid secondary battery including an anode-solid electrolyte sub-assembly according to an embodiment.

The interlayer may include an interlayer material having an ionic conductivity of about $10^{-8}$ siemens per centimeter (S/cm) or greater and an electronic conductivity of about $4.0 \times 10^{-9}$ S/cm or greater. The interlayer material may exhibit both ion conductivity and electron conductivity simultaneously, and have mechanical properties that controls a stress caused by lithium precipitation.

For example, the interlayer material may have an electronic conductivity at 25 °C of about $4.0 \times 10^{-9}$ S/cm or greater, about $1.0 \times 10^{-8}$ S/cm or greater, about $4.0 \times 10^{-8}$ S/cm or greater, about $1.0 \times 10^{-7}$ S/cm or greater, about $4.0 \times 10^{-7}$ S/cm or greater, about $1.0 \times 10^{-6}$ S/cm or greater, or about $1.0 \times 10^{-5}$ S/cm or greater. As the interlayer material has such a high electronic conductivity, internal resistance in an all-solid secondary battery including the interlayer material may be reduced. The interlayer present between the MIEC structure and the solid electrolyte may inhibit a short-circuit by preventing an electrical current from being concentrated on tip portions of the MIEC structure.

For example, the ionic conductivity of the interlayer material may be about $1.0 \times 10^{-8}$ S/cm or greater, about $1.0 \times 10^{-6}$ S/cm or greater, about $5.0 \times 10^{-6}$ S/cm or greater, about $1.0 \times 10^{-5}$ S/cm or greater, or about $5.0 \times 10^{-5}$ S/cm or greater. As the interlayer material has an ionic conductivity in the aforementioned ranges, internal resistance in an all-solid secondary battery including the interlayer material may be reduced.

In addition, the interlayer may contain lithium or a material that alloys with or forms a compound with lithium. By using a material having aforementioned ion conductivity and electron conductivity as the interlayer forming material, a stress caused by lithium precipitation may be controlled.

According to an embodiment, the interlayer may contain an interlayer material containing lithium; a carbon anode active material; a mixture of the carbon anode active material and a second metal, a metalloid, or a combination thereof; a composite of the carbon anode active material and the second metal, the metalloid, or a combination thereof; or a combination thereof. For example, the interlayer may include the carbon anode active material, and the second metal, the metalloid, or a combination thereof.

The second metal, the metalloid, or a combination thereof, may be tin (Sn), indium (In), silicon (Si), gallium (Ga), aluminum (Al), titanium (Ti), zirconium (Zr), niobium (Nb), germanium (Ge), antimony (Sb), bismuth (Bi), zinc (Zn), gold (Au), platinum (Pt), palladium (Pd), nickel (Ni), iron (Fe), cobalt (Co), chromium (Cr), magnesium (Mg), cesium (Cs), cerium (Ce), molybdenum (Mo), silver (Ag), sodium (Na), potassium (K), calcium (Ca), yttrium (Y), tantalum (Ta), hafnium (Hf), barium (Ba), vanadium (V), strontium (Sr), tellurium (Te), lanthanum (La), or a combination thereof.

A binder may be added to the interlayer.

The interlayer may have a thickness of, for example, about 1 $\mu$m to about 20 $\mu$m, about 3 $\mu$m to 15 $\mu$m, or

about 5 μm to about 12 μm. As used herein, the term "thickness" refers to an average thickness. In an aspect, the average thickness may be measured by analyzing the thickness using scanning electron microscopy (SEM). The interlayer having a thickness in the aforementioned ranges may provide excellent inhibition on lithium dendrites formation, and by not acting as a resistance film, may allow the production of an all-solid secondary battery with excellent high-rate characteristics.

At least a portion of vertical open pores may contain the interlayer material. When a first interlayer comprises an interlayer material included inside a portion of the pores, a thickness ratio of the interlayer and the first interlayer formed on the MIEC structure may be, for example, about 3:1 to about 20:1, about 4:1 to about 15:1, or about 5:1 to about 8:1.

An average pore size in the MIEC structure may be about 5 nm to about 200 nm, and the average pore size in the interlayer may be about 0.1 nm to about 100 nm, about 1 nm to about 90 nm, about 5 nm to about 80 nm, about 10 nm to about 70 nm, about 30 nm to about 60 nm, or about 35 nm to about 55 nm.

The MIEC structure may have a greater average pore size than the average pore size of the interlayer. Having such a gradient in pore size, pores may be packed with sufficient density in the interlayer, such that Li provides Li seeds uniformly while moving without being precipitated. In a MIEC host having a large pore size, Li uniformly descending from the interlayer may be precipitated and stored in the host, and since there is no stress induced, the internal stress change may be reduced.

An all-solid secondary battery according to an embodiment may have a structure, as shown in FIG. 1E, in which a cathode 10 including a cathode active material layer 12 and a cathode current collector 11 is disposed on the anode-solid electrolyte sub-assembly 26 depicted in FIG. 1B. The all-solid secondary battery as illustrated in FIG. 1E may have the anode-solid electrolyte sub-assembly having the structure depicted in FIG. 1B, and may also have the anode-solid electrolyte sub-assembly having a laminate structure as shown in FIG. 1A or 1C.

In FIG. 1A or 1C, the MIEC structure is illustrated as having an empty pore. However, as shown in FIG. 1D, the MIEC structure may include lithium precipitated in the open pore 24 after charging.

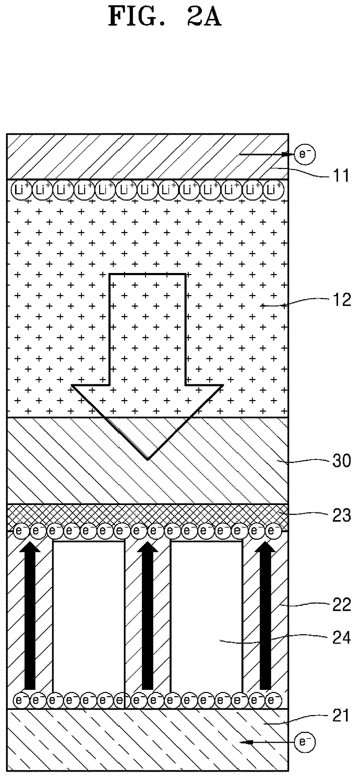

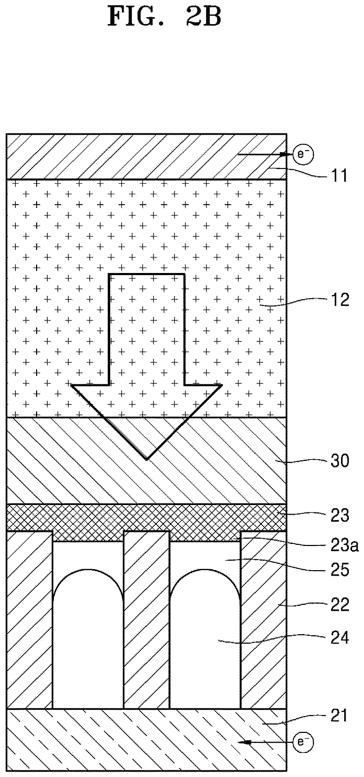

Referring to FIGS. 2A and 2B, a charging process of an all-solid secondary battery will be described below.

In FIG. 2A, a moving direction of lithium ions and a moving direction of electrons during charging of the all-solid secondary battery are shown, and in FIG. 2B, the moving direction of electrons is shown.

Once the all-solid secondary battery is charged, lithium metal ions $Li^+$ are transported from the cathode 10 through the solid electrolyte 30 to the anode, and lithium grows from the solid electrolyte 30 and transfers to the interlayer wherein the interlayer facilitates lithium precipitation. As a result, precipitated lithium may be transferred and stored in at least a portion of the open pores 24 of the MIEC structure 22 having electronic conductivity and ion conductivity with respect to lithium ions. In addition, as shown in FIGS. 2A and 2B, electrons are supplied into the anode, and these electrons travel to the cathode 10. As shown in FIG. 2B, there may be more lithium precipitation at the periphery of the open pores than at the center thereof.

After charging, the open pores of the MIEC structure may contain a first metal material, and the first metal material may be lithium, a lithium-first metal (M1) alloy, or a combination thereof. Here, the first metal material may have an average size of about 0.1 nm to about 200 nm. Here, an average size denotes an average particle diameter.

Examples of the first metal (M1) material may include a first metal (M1), a lithium-first metal (M1) alloy, or a combination thereof. The first metal (M1) may be a metal, and examples of this metal may include tin (Sn), indium (In), silicon (Si), gallium (Ga), aluminum (Al), titanium (Ti), zirconium (Zr), niobium (Nb), germanium (Ge), antimony (Sb), bismuth (Bi), zinc (Zn), gold (Au), platinum (Pt), palladium (Pd), nickel (Ni), iron (Fe), cobalt (Co), chromium (Cr), magnesium (Mg), cesium (Cs), cerium (Ce), silver (Ag), sodium (Na), potassium (K), calcium (Ca), yttrium (Y), tantalum (Ta), hafnium (Hf), barium (Ba), vanadium (V), strontium (Sr), tellurium (Te), lanthanum (La), or a combination thereof. The first metal material may be, for example, Au, Pt, Pd, Si, Ag, Al, Bi, Sn, Zn, or a combination thereof.

The first metal material may be a Li-Ag alloy, a Li-Au alloy, a Li-Al alloy, a Li-Sn alloy, a Li-In alloy, a Li-Zn alloy, a Li-Ge alloy, a Li-Si alloy, a Li-Sb alloy, a Li-Bi alloy, a Li-Ga alloy, a Li-Na alloy, a Li-K alloy, a Li-Te alloy, a Li-Mg alloy, a Li-Mo alloy, a Li-Sn-Bi alloy, a Li-Sn-Ag alloy, a Li-Sn-Na alloy, a Li-Sn-K alloy, a Li-Sn-Ca alloy, a Li-Te-Ag alloy, a Li-Sb-Ag alloy, a Li-Sn-Sb alloy, a Li-Sn-V alloy, a Li-Sn-Ni alloy, a Li-Sn-Cu alloy, a Li-Sn-Zn alloy, a Li-Sn-Ga alloy, a Li-Sn-Ge alloy, a Li-Sn-Sr alloy, a Li-Sn-Y alloy, a Li-Sn-Ba alloy, a Li-Sn-Au alloy, a Li-Sn-La alloy, a Li-Al-Ga alloy, a Li-Mg-Sn alloy, a Li-Mg-Al alloy, a Li-Mg-Si alloy, a Li-Mg-Zn alloy, a Li-Mg-Ga alloy, a Li-Mg-Ag alloy, or a combination thereof.

The interlayer may include a composite of the carbon anode active material, and the second metal, the metalloid, or a combination thereof.

An amount of the second metal, the metalloid, or a combination thereof in the composite may be, with respect to 100 parts by weight of the composite, about 0.1 part by weight to about 95 parts by weight, about 1 part by weight to about 95 parts by weight, about 5 parts by weight to about 90 parts by weight, about 10 to about 85 parts by weight, or about 15 parts by weight to about 70 parts by weight.

Here, the second metal, the metalloid, or a combination thereof in the interlayer may have a size of about 0.1 nm to about 200 nm. When the size of the first metal material is within the above ranges, interfacial resistance between the solid electrolyte and anode may decrease.

Since the interlayer due to high electron conductivity prevents electrons from being concentrated at tip portions of the MIEC structure and induces uniform distribution of electrons, the interlayer may avoid acting as a resistance film and thus prevent deterioration of high-rate characteristics of the all-solid secondary battery. In addition, a distribution of an electrical current at the tip portions of the MIEC structure may serve to inhibit the formation of lithium dendrites. In addition, in the event where lithium exceeds the reservoir capacity of the MIEC structure due to overcharging, the interlayer may function as a protection layer that prevents lithium metal from being in direct contact with the solid electrolyte. In addition, by inducing lithium precipitated past the interlayer to precipitate into the vertical nanotube-type MIEC structure, degradations from cell thickness changes and induced internal pressures may be effectively prevented.

The all-solid secondary battery may show a cell thickness change of 20 % or less, about 5 % to about 20 %, or about 5% to about 10%. In addition, the all-solid secondary battery may show an internal stress change of 0.5 megapascal (MPa) or less, about 0.001 MPa to about 0.5 MPa, or about 0.001 MPa to about 0.4 MPa.

The interlayer may include: a carbon material capable of reacting with lithium; lithium; a mixture of the carbon material a second metal, a metalloid, or a combination thereof; a composite of the carbon material and the second metal, the metalloid, or a combination thereof; or a combination thereof.

The carbon material may act as a buffer layer that can mitigate volume expansions caused by lithium precipitation due to electrodeposition and dissolution upon charging and discharging, and may include amorphous carbon, for example. Examples of the amorphous carbon may include carbon black (CB), acetylene black (AB), furnace black (FB), Ketjen black (KB), graphene, carbon nanotube, carbon nanofiber, and the like. However, the amorphous carbon is not necessarily limited to the aforementioned examples, and may be any suitable material classified as amorphous carbon in the art.

The second metal, the metalloid, or a combination thereof, may include tin (Sn), indium (In), silicon (Si), gallium (Ga), aluminum (Al), titanium (Ti), zirconium (Zr), niobium (Nb), germanium (Ge), antimony (Sb), bismuth (Bi), zinc (Zn), gold (Au), platinum (Pt), palladium (Pd), nickel (Ni), iron (Fe), cobalt (Co), chromium (Cr), magnesium (Mg), cesium (Cs), cerium (Ce), molybdenum (Mo), silver (Ag), sodium (Na), potassium (K), calcium (Ca), yttrium (Y), tantalum (Ta), hafnium (Hf), barium (Ba), vanadium (V), strontium (Sr), tellurium (Te), lanthanum (La), or a combination thereof. However, without being limited to the aforementioned examples, any suitable material available as a metal anode active material in the art that alloys with or forms a compound with lithium may be used.

The interlayer may include an anode active material from a carbon material and a metal or metalloid anode active material, or may include a mixture of different anode active materials. For example, the interlayer may include amorphous carbon alone, or may include the metal or metalloid anode active material of tin (Sn), indium (In), silicon (Si), gallium (Ga), aluminum (Al), titanium (Ti), zirconium (Zr), niobium (Nb), germanium (Ge), antimony (Sb), bismuth (Bi), zinc (Zn), gold (Au), platinum (Pt), palladium (Pd), nickel (Ni), iron (Fe), cobalt (Co), chromium (Cr), magnesium (Mg), cesium (Cs), cerium (Ce), molybdenum (Mo), silver (Ag), sodium (Na), potassium (K), calcium (Ca), yttrium (Y), tantalum (Ta), hafnium (Hf), barium (Ba), vanadium (V), strontium (Sr), tellurium (Te), lanthanum (La), or a combination thereof. Alternatively, the interlayer may include a composite of amorphous carbon and the metal or metalloid anode active material of tin (Sn), indium (In), silicon (Si), gallium (Ga), aluminum (Al), titanium (Ti), zirconium (Zr), niobium (Nb), germanium (Ge), antimony (Sb), bismuth (Bi), zinc (Zn), gold (Au), platinum (Pt), palladium (Pd), nickel (Ni), iron (Fe), cobalt (Co), chromium (Cr), magnesium (Mg), cesium (Cs), cerium (Ce), molybdenum (Mo), silver (Ag), sodium (Na), potassium (K), calcium (Ca), yttrium (Y), tantalum (Ta), hafnium (Hf), barium (Ba), vanadium (V), strontium (Sr), tellurium (Te), lanthanum (La), or a combination thereof. A weight ratio of amorphous carbon and the metal or metalloid anode active material such as silver, for example, may be about 10:1 to about 1:2, about 5:1 to about 1:1, or about 4:1 to about 2:1 for example, but without being necessarily limited thereto, may be selected in accordance with a desired feature of an all-solid secondary battery. As the interlayer has the above composition, the all-solid secondary battery may have further improved cycling characteristics.

The interlayer material may include, for example, a mixture of a first particle composed of amorphous carbon, and a second particle composed of a metal or metalloid. The mixture may be a simple mixture of the first particle and the second particle or a mixture of the first particle and the second particle physically bound by a binder. Examples of the metal or metalloid may include tin (Sn), indium (In), silicon (Si), gallium (Ga), aluminum (Al), titanium (Ti), zirconium (Zr), niobium (Nb), germanium (Ge), antimony (Sb), bismuth (Bi), zinc (Zn), gold (Au), platinum (Pt), palladium (Pd), nickel (Ni), iron (Fe), cobalt (Co), chromium (Cr), magnesium (Mg), cesium (Cs), cerium (Ce), molybdenum (Mo), silver (Ag), sodium (Na), potassium (K), calcium (Ca), yttrium (Y), tantalum (Ta), hafnium (Hf), barium (Ba), vanadium (V), strontium (Sr), tellurium (Te), lanthanum (La), or a combination thereof. In some cases, the metalloid may be a semiconductor. An amount of the second particle may be about 8 weight percent (wt%) to about 60 wt%, about 10 wt% to about 50 wt%, about 15 wt% to about 40 wt%, or about 20 wt% to about 30 wt%, with respect to a total weight of the mixture. As the amount of the second particle is within the above ranges, a further improvement in cycling characteristics of the all-solid secondary battery may be achieved.

The interlayer may include a composite of the first particle composed of the amorphous carbon and the second particle composed of the metal or metalloid, wherein the amount of the second particle may be about 1 wt% to 60 wt% relative to the total weight of the composite; or the mixture of the first particle composed of the amorphous carbon and the second particle composed of the metal or the metalloid, wherein the amount of the second particle may be about 1 wt% to 60 wt% relative to the total weight of the mixture.

For example, the interlayer may contain a mixture of a carbon material and silver (Ag), or may contain a composite of a carbon material and silver (Ag).

The interlayer may be a carbon material, graphite, gold, silver, nickel, platinum, molybdenum, tungsten, stainless steel, lithium-Ag, carbon-Ag, or a combination thereof.

The interlayer may have a thickness of 20 $\mu$m or less, about 1 $\mu$m to about 20 $\mu$m, about 1 $\mu$m to about 10 $\mu$m, or about 1 $\mu$m to about 9 $\mu$m. When the thickness of the interlayer is within the above ranges, it may effectively inhibit short-circuits in the all-solid secondary battery while improving cycling characteristics thereof.

A volume of open pores 24 may be determined by a capacity per unit area of a cathode.

Lithium to be precipitated may be precipitated as lithium metal or may be partially present as a lithium alloy.

According to an embodiment, the precipitated lithium may be present as lithium metal.

A manufacturing of a battery module in a conventional anode-less all-solid secondary battery using a conventional precipitation-type anode necessitates the use of buffer agent for severe thickness changes. However, using the sub-assembly according to an embodiment of the disclosure, by eliminating this need, may further increase the energy density of an all-solid secondary battery. In addition, pressure issues resulting from lithium precipitation formed inside the cell and battery may be addressed. In addition, fast movement of lithium ions facilitated by the interlayer according to an embodiment may improve high-rate characteristics of the all-solid secondary battery. Finally, a zero-stress aspect of a zero-stress anode may eliminate the need for the buffer agent as an auxiliary pressure control method, and therefore, eliminating the need for such buffer agent may result in an increase in the energy density of an all-solid secondary battery.

In the present specification, when layers do not have a uniform thickness, the thickness of said layers may be defined as an average value calculated from their respective thicknesses.

The interlayer, for example, may contain a lithium-free composite at the time of battery assembly, but after pressing and/or battery charging, may transform to a lithium-containing composite.

In an all-solid secondary battery according to an embodiment, a total thickness and lifespan characteristics of the battery may be optimized by removing thickness changes due to lithium electrodeposition/dissolution upon charging and discharging, and further, since there is no need for a conventional buffer layer (gasket) to be applied, high energy density may be achieved, and lithium ion movement maximized via interlayers may improve high-rate characteristics. As a result, the all-solid secondary battery according to an embodiment may achieve excellent energy density characteristics.

According to another embodiment, when the all-solid secondary battery is in an initial state of battery assembly or in a completely discharged state, the anode current collector, the interlayer, and regions therebetween may be, in some cases, a lithium (Li) metal-free region not containing Li metal.

(Cathode)

FIG. 1E is a diagram describing an all-solid secondary battery according to an embodiment. Referring to FIG. 1E, the all-solid secondary battery is a secondary battery using a solid electrolyte as the electrolyte. The all-solid secondary battery may include a cathode 10 and an anode-solid electrolyte sub-assembly 26. The cathode 10 may include a cathode current collector 11 and a cathode active material layer 12.

For example, the cathode current collector 11 may utilize a plate, a foil, or the like, comprising indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof.

For example, the cathode active material layer 12 may include a cathode active material.

The cathode active material may be a cathode active material capable of intercalation and deintercalation of lithium ions in a reversible manner. Examples of the cathode active material include: lithium transition metal oxides such as lithium cobalt oxide (LCO), lithium nickel oxide, lithium nickel cobalt oxide, lithium nickel cobalt aluminum oxide (NCA), lithium nickel cobalt manganese oxide (NCM), lithium manganate, lithium iron phosphate, and the like; and nickel sulfide, copper sulfide, lithium sulfide, iron oxide, vanadium oxide, and the like. The cathode active material is not limited to the aforementioned examples and may be any suitable material available as a cathode active material in the art. The cathode active material may be a single material or a mixture of two or more materials.

The cathode active material may be, for example, a compound represented by any one of the following formulas: $Li_aA_{1-b}B'_bD'_2$ (In the formula, $0.90 \le a \le 1$ and $0 \le b \le 0.5$); $Li_aE_{1-b}B'_bO_{2-c}D'_c$ (In the formula, $0.90 \le a \le 1$, $0 \le b \le 0.5$, $0 \le c \le 0.05$); $LiE_{2-b}B'_bO_{4-c}D'_c$ (In the formula, $0 \le b \le 0.5$ and $0 \le c \le 0.05$); $Li_aNi_{1-b-c}Co_bB'_cD'_\alpha$ (In the formula, $0.90 \le a \le 1$, $0 \le b \le 0.5$, $0 \le c \le 0.05$, and $0 < \alpha \le 2$); $Li_aNi_{1-b-c}Co_bB'_cO_{2-\alpha}F'_\alpha$ (In the formula, $0.90 \le a \le 1$, $0 \le b \le 0.5$, $0 \le c \le 0.05$, and $0 < \alpha < 2$); $Li_aNi_{1-b-c}Co_bB'_cO_{2-\alpha}F'_2$ (In the formula, $0.90 \le a \le 1$, $0 \le b \le 0.5$, $0 \le c \le 0.05$, and $0 < \alpha < 2$);

$Li_aNi_{1-b-c}Mn_bB'_cD'_\alpha$ (In the formula, $0.90 \le a \le 1$, $0 \le b \le 0.5$, $0 \le c \le 0.05$, and $0 < \alpha \le 2$); $Li_aNi_{1-b-c}Mn_bB'_cO_{2-\alpha}F'_\alpha$ (In the formula, $0.90 \le a \le 1$, $0 \le b \le 0.5$, $0 \le c \le 0.05$, and $0 < \alpha < 2$); $Li_aNi_{1-b-c}Mn_bB'_cO_{2-\alpha}F'_2$ (In the formula, $0.90 \le a \le 1$, $0 \le b \le 0.5$, $0 \le c \le 0.05$, and $0 < \alpha < 2$); $Li_aNi_bE_cG_dO_2$ (In the formula, $0.90 \le a \le 1$, $0 \le b \le 0.9$, $0 \le c \le 0.5$, and $0.001 \le d \le 0.1$).; $Li_aNi_bCo_cMn_dGeO_2$ (In the formula, $0.90 \le a \le 1$, $0 \le b \le 0.9$, $0 \le c \le 0.5$, $0 \le d \le 0.5$, and $0.001 \le e \le 0.1$); $Li_aNiG_bO_2$ (In the formula, $0.90 \le a \le 1$ and $0.001 \le b \le 0.1$); $Li_aCoG_bO_2$ (In the formula, $0.90 \le a \le 1$ and $0.001 \le b \le 0.1$); $Li_aMnG_bO_2$ (In the formula, $0.90 \le a \le 1$ and $0.001 \le b \le 0.1$); $Li_aMn_2G_bO_4$ (In the formula, $0.90 \le a \le 1$ and $0.001 \le b \le 0.1$); $QO_2$; $QS_2$; $LiQS_2$; $V_2O_5$; $LiV_2O_5$; $LiI'O_2$; $LiNiVO_4$; $Li_{(3-f)}J_2(PO_4)_3 (0 \le f \le 2)$; $Li_{(3-f)}Fe_2(PO_4)_3 (0 \le f \le 2)$; and $LiFePO_4$. In the above compound, A may be Ni, Co, Mn, or a combination thereof; B' may be Al, Ni, Co, Mn, Cr, Fe, Mg, Sr, V, a rare-earth element, or a combination thereof; D' may be O, F, S, P, or a combination thereof; E may be Co, Mn, or a combination thereof; F' may be F, S, P, or a combination thereof; G may be Al, Cr, Mn, Fe, Mg, La, Ce, Sr, V, or a combination thereof; Q may be Ti, Mo, Mn, or a combination thereof; I' may be Cr, V, Fe, Sc, Y, or a combination thereof; and J may be V, Cr, Mn, Co, Ni, Cu, or a combination thereof. A compound having a coating layer added on a surface of the above-described compound may also be used, and a mixture of the above compound and a compound having a coating layer added thereon may also be used. The coating layer added on the surface of the above-described compound includes, for example, compounds of a coating element, such as oxides and hydroxides of the coating element, oxyhydroxides of the coating element, oxycarbonates of the coating element, and hydroxycarbonates of the coating element. Compounds forming the above coating layer may be amorphous or crystalline. The coating element included in the coating layer may be Mg, Al, Co, K, Na, Ca, Si, Ti, V, Sn, Ge, Ga, B, As, Zr, or a mixture thereof. The method of forming a coating layer may be selected from methods that do not adversely affect the physical properties of cathode active material. Examples of a coating method may include spray coating, dip coating, and the like. Specific coating methods are well known by those of ordinary skill in the art, and therefore detailed descriptions thereof will be omitted.

For example, the cathode active material may include, among the aforementioned lithium transition metal oxides, a lithium salt of a transition metal oxide that has a layered rock-salt type structure. The term "layered rock salt type structure" may be, for example, a structure in which oxygen atom layers and metal atom layers are alternatingly and regularly arranged in <111> direction of a cubic rock salt type structure, such that each atom layer forms a two-dimensional plane. The "cubic rock salt type" structure may represent a NaCl type structure, which is a type of lattice structure, and in particular, a structure in which the face centered cubic lattices (fcc) formed by cations and anions are positioned obliquely with respect to each other by 1/2 ridge of unit lattice. Examples of a lithium transition metal oxide having such a layered rock-salt type structure may be a ternary lithium transition metal oxide, such as $LiNi_xCo_yAl_zO_2$ (NCA) and $LiNi_xCo_yMn_zO_2$ (NCM) ($0 < x < 1$, $0 < y < 1$, $0 < z < 1$, and $x + y + z = 1$). When the cathode active material contains a ternary lithium transition metal oxide having a layered rock-salt type structure, the all-solid secondary battery may have further improved energy density and thermal stability.

The cathode active material may be covered by a coating layer as described above. The coating layer may be any suitable material known in the art as a coating layer for a cathode active material in an all-solid secondary battery. The coating layer may be, for example, $Li_2O-ZrO_2$.

When the cathode active material contains nickel (Ni) as a ternary transition metal oxide, such as NCA or NCM, it may increase capacity density of the all-solid secondary battery and metal elution of the cathode active material in a charged state can decrease. Thus, the all-solid secondary battery may have improved cycling characteristics.

The shape of the cathode active material has a particle shape, such as a perfect sphere, an oval sphere, and the like. In addition, a particle diameter of the cathode active material is not particularly limited and may be within a range that is applicable to a cathode active material in a conventional solid-state secondary battery. The amount of the cathode active material in the cathode 10 is not particularly limited and may be within a range that is applicable to a cathode of a conventional solid-state secondary battery.

In addition to the above-described cathode active material, the cathode 10 may optionally further include other additives such as a conductive material, a binder, a filler, a dispersing agent, an ion conductivity aid, and the like. Examples of the conductive material may include graphite, carbon black, acetylene black, Ketjen black, carbon fibers, metal powder, and the like. Examples of the binder may include styrene butadiene rubber (SBR), polytetrafluoroethylene, polyvinylidene fluoride, polyethylene, and the like. For components such as a filler, a dispersing agent, and an ion conductivity aid that can be blended in the cathode 10, any known materials suitable for use in an electrode of an all-solid secondary battery may be used.

The cathode 10 may optionally further include a solid electrolyte. The solid electrolyte included in the cathode 10 may be similar to or different from a solid electrolyte included in the solid electrolyte 30. Detailed description of the solid electrolyte may be found in the description of the solid electrolyte 30.

Alternatively, the cathode 10 may be immersed in a liquid electrolyte, for example. The liquid electrolyte may include a lithium salt and an ionic liquid, a polymer ionic liquid, or a combination thereof. The liquid electrolyte may be nonvolatile. The ionic liquid may refer to a room-temperature molten salt or a salt in a liquid state at room temperature, which consists of ions alone and has a melting point of room temperature or less. The ionic liquid may comprise: a) a cation of ammonium, pyrrolidinium, pyridinium, pyrimidinium, imidazolium, piperidinium, pyrazolium, oxazolium, pyridazinium, phosphonium, sulfonium, triazolium, or a mixture thereof; and b) an anion of $BF_4^-$, $PF_6^-$, $AsF_6^-$, $SbF_6^-$, $AlCl_4^-$, $HSO_4^-$, $ClO_4^-$, $CH_3SO_3^-$, $CF_3CO_2^-$, $Cl^-$, $Br^-$, $I^-$, $SO_4^{2-}$, $CF_3SO_3^-$, $(FSO_2)_2N^-$, $(C_2F_5SO_2)_2N^-$, $(C_2F_5SO_2)(CF_3SO_2)N^-$, $(CF_3SO_2)_2N^-$, or a combination thereof. The ionic liquid may be, for example, N-methyl-N-propyl pyrrolidinium bis(trifluoromethanesulfonyl)imide, N-butyl-N-methylpyrrolidinium bis(trifluoromethylsulfonyl)imide, 1-butyl-3-methylimidazolium bis(trifluoromethylsulfonyl)imide, and 1-ethyl-3-methylimidazolium bis(trifluoromethylsulfonyl)amide. The polymer ionic liquid may contain a repeating unit including: a) a cation of ammonium, pyrrolidinium, pyridinium, pyrimidinium, imidazolium, piperidinium, pyrazolium, oxazolium, pyridazinium, phosphonium, sulfonium, triazolium, and a mixture thereof; and b) an anion of $BF_4^-$, $PF_6^-$, $AsF_6^-$, $SbF_6^-$, $AlCl_4^-$, $HSO_4^-$, $ClO_4^-$, $CH_3SO_3^-$, $CF_3CO_2^-$, $(CF_3SO_2)_2N^-$, $(FSO_2)_2N^-$, $Cl^-$, $Br^-$, $I^-$, $SO_4^{2-}$, $CF_3SO_3^-$, $(C_2F_5SO_2)_2N^-$, $(C_2F_5SO_2)(CF_3SO_2)N^-$, $NO_3^-$, $Al_2Cl_7^-$, $(CF_3SO_2)_3C^-$, $(CF_3)_2PF_4^-$, $(CF_3)_3PF_3^-$, $(CF_3)4PF_2^-$, $(CF_3)_5PF^-$, $(CF_3)_6P^-$, $SF_5CF_2SO_3^-$, $SF_5CHFCF_2SO_3^-$, $CF_3CF_2(CF_3)_2CO^-$, $CF_3SO_2)_2CH^-$, $(SF_5)_3C^-$, $(O(CF_3)_2C_2(CF_3)_2O)_2PO^-$, or a combination thereof. The lithium salt may be any lithium salt available in the art. The lithium salt may be, for example, $LiPF_6$, $LiBF_4$, $LiSbF_6$, $LiAsF_6$, $LiClO_4$, $LiCF_3SO_3$, $Li(CF_3SO_2)_2N$, $Li(FSO_2)_2N$, $LiC_4F_9SO_3$, $LiAlO_2$, $LiAlCl_4$, $LiN(C_xF_{2x+1}SO2)(C_yF_{2y+1}SO_2)$ (Here, x and y each are a natural number), $LiCl$, $LiI$, or a mixture thereof. The concentration of a lithium salt contained in the liquid electrolyte may be about 0.1 molar (M) to about 5 M. A content of a liquid electrolyte with which the cathode 10 is impregnated may be about 0 part by weight to about 100 parts by weight, about 0 part by weight to about 50 parts by weight, about 0 part by weight to about 30 parts by weight, about 0 part by weight to about 20 parts by weight, about 0 part by weight to about 10 parts by weight, or about 0 part by weight to about 5 parts by weight, with respect to 100 parts by weight of the cathode active material layer 12 not including the liquid electrolyte.

(Anode-Solid Electrolyte Sub-Assembly)

An anode-solid electrolyte sub-assembly 26 may include an anode current collector 21, an interlayer 23, a MIEC structure 22 having a plurality of pores 24, and a solid electrolyte 30.

The solid electrolyte 30 may be disposed opposite the cathode 10.

The solid electrolyte may include an oxide-based (i.e., oxide) solid electrolyte, a sulfide-based (i.e., sulfide) solid electrolyte, a polymer electrolyte, or a combination thereof.

The oxide-based solid electrolyte may be $Li_{1+x+y}Al_xTi_{2-x}Si_yP_{3-y}O_{12}$ (0<x<2 and 0≤y<3), $Li_3PO_4$, $Li_xTi_y(PO_4)_3$ (0<x<2 and 0<y<3), $Li_xAl_yTi_z(PO_4)_3$ (0<x<2, 0<y<1, and 0<z<3), $Li_{1+x+y}(Al_pGa_{1-p})_x(Ti_qGe_{1-q})_{2-x}Si_yP_{3-y}O_{12}$ (0≤x≤1, 0≤y≤1, 0≤p≤1, and 0≤q≤1), $Li_xLa_yTiO_3$ (0<x<2 and 0<y<3), $Li_2O$, $LiOH$, $Li_2CO_3$, $LiAlO_2$, $Li_2O-Al_2O_3-SiO_2-P_2O_5-TiO_2-GeO_2$, $Li_{3+x}La_3M_2O_{12}$ (M = Te, Nb, or Zr, and x is an integer of 1 to 10), or a combination thereof. The solid electrolyte may be prepared by a sintering method, or the like.

The oxide-based solid electrolyte may be, for example, a garnet-type solid electrolyte.

Non-limiting examples of the garnet-type solid electrolyte may include an oxide represented by Formula 1:

Formula 1    $(Li_xM1_y)(M2)_{3-\delta}(M3)_{2-\omega}O_{12-z}X_z$

in Formula 1, 6≤x≤8, 0≤y<2, -0.2≤δ≤0.2, -0.2≤ω≤0.2, and 0≤z≤2,

M1 may be a monovalent cation, a divalent cation, a trivalent cation, or a combination thereof,

M2 may be a monovalentcation , a divalent cation, a trivalent cation, or a combination thereof,

M3 may be a monovalent cation, a divalent cation, a trivalent cation, a tetravalent cation, a pentavalent cation, a hexavalent cation, or a combination thereof, and

X may be a monovalent anion, a divalent anion, a trivalent anion, or a combination thereof.

In Formula 1, examples of the monovalent cation may include Na, K, Rb, Cs, H, Fr, or the like, and examples of the divalent cation may include Mg, Ca, Ba, Sr, or the like. Examples of the trivalent cation may include In, Sc, Cr, Au, B, Al, Ga, or the like, and examples of the tetravalent cation may include Sn, Ti, Mn, Ir, Ru, Pd, Mo, Hf, Ge, V, Si, or the like. In addition, examples of the pentavalent cation may include Nb, Ta, Sb, V, P, or the like.

M1 may be hydrogen (H), iron (Fe), gallium (Ga), aluminum (Al), boron (B), beryllium (Be) or a combination thereof. M2 may be lanthanum (La), barium (Ba), calcium (Ca), strontium (Sr), yttrium (Y), bismuth (Bi), praseodymium (Pr), neodymium (Nd), actinium (Ac), samarium (Sm), gadolinium (Gd), or a combination thereof. M3 may be zirconium (Zr), hafnium (Hf), tin (Sn), tin (Sn), niobium (Nb), titanium (Ti), vanadium (V), chromium (Cr), manganese (Mn), cobalt (Co), nickel (Ni), copper (Cu), molybdenum (Mo), tungsten (W), tantalum (Ta), magnesium (Mg), technetium (Tc), ruthenium (Ru), palladium (Pd), iridium (Ir), scandium (Sc), cadmium (Cd), indium (In), antimony (Sb), tellurium (Te), thallium (Tl), platinum (Pt), silicon (Si), aluminum (Al), or a combination thereof.

In Formula 1, the monovalent anion used as X may be a halogen atom, a pseudohalogen, or a combination thereof, the divalent anion used as X may be $S^{2-}$ or $Se^{2-}$, and the trivalent anion used as X may be, for example, $N^{3-}$.

In Formula 1, $6.6 \leq x \leq 8$, $6.7 \leq x \leq 7.5$, or $6.8 \leq x \leq 7.1$.

Non-limiting examples of the garnet-type solid electrolyte may include an oxide represented by Formula 2:

$$\text{Formula 2} \qquad (Li_xM1_y)(La_{a1}M2_{a2})_{3-\delta}(Zr_{b1}M3_{b2})_{2-\omega}O_{12-z}X_z$$

in Formula 2, M1 may be hydrogen (H), iron (Fe), gallium (Ga), aluminum (Al), boron (B), beryllium (Be) or a combination thereof,

M2 may be barium (Ba), calcium (Ca), strontium (Sr), yttrium (Y), bismuth (Bi), praseodymium (Pr), neodymium (Nd), actinium (Ac), samarium (Sm), gadolinium (Gd) or a combination thereof,

M3 may be hafnium (Hf), tin (Sn), niobium (Nb), titanium (Ti), vanadium (V), chromium (Cr), manganese (Mn), cobalt (Co), nickel (Ni), copper (Cu), molybdenum (Mo), tungsten (W), tantalum (Ta), magnesium (Mg), technetium (Tc), ruthenium (Ru), palladium (Pd), iridium (Ir), scandium (Sc), cadmium (Cd), indium (In), antimony (Sb), tellurium (Te), thallium (Tl), platinum (Pt), silicon (Si), aluminum (Al), or combinations thereof,

$$6 \leq x \leq 8,\ 0 \leq y < 2,\ -0.2 \leq \delta \leq 0.2,\ -0.2 \leq \omega \leq 0.2,\ 0 \leq z \leq 2,$$

$$a1+a2=1,\ 0 < a1 \leq 1,\ 0 \leq a2 < 1,$$

$$b1+b2=1,\ 0 < b1 < 1,\ \text{and}\ 0 \leq b2 < 1,$$

wherein X may be a monovalent anion, a divalent anion, a trivalent anion, or a combination thereof.

In Formula 2, the monovalent anion used as X may be a halogen atom, a pseudohalogen, or a combination thereof, the divalent anion used as X may be $S^{2-}$ or $Se^{2-}$; and the trivalent anion used as X may be, for example, $N^{3-}$.

In Formula 2, $6.6 \leq x \leq 8$, $6.7 \leq x \leq 7.5$, or $6.8 \leq x \leq 7.1$.

As used herein, the term "pseudohalogen" refers to a molecule which consists of two or more electronegative atoms similar to halogens in a free state, and generates anions similar to halide ions. Examples of the pseudohalogen may include a cyanide, a cyanate, a thiocyanate, an azide, or a combination thereof.

Examples of the halogen atom may include iodine (I), chlorine (Cl), bromine (Br), fluorine (F), or a combination thereof. Examples of the pseudohalogen may include a cyanide, a cyanate, a thiocyanate, an azide, or a combination thereof.

The trivalent anion may be, for example, $N^{3-}$.

According to another embodiment, the garnet-type solid electrolyte may be an oxide represented by Formula 3:

$$\text{Formula 3} \qquad Li_{3+x}La_3Zr_{2-a}M_aO_{12}$$

in Formula 3, M may be Al, Ga, In, Si, Ge, Sn, Sb, Bi, Sc, Y, Ti, Hf, V, Nb, Ta, W, or a combination thereof, wherein x is a number of 1 to 10, and $0 \leq a < 2$.

Examples of the garnet-type solid electrolyte may include $Li_7La_3Zr_2O_{12}$, $L_{16.5}La_3Zr_{1.5}Ta_{0.5}O_{12}$, and the like.

When using an oxide-based solid electrolyte, an additional lithium metal layer may be further formed at the anode for prelithiation. Here, the lithium metal layer may have a ring shape surrounding the anode.

Alternatively, the solid electrolyte may be a sulfide-based solid electrolyte, for example. The sulfide-based solid electrolyte may be, for example, $Li_2S-P_2S_5$, $Li_2S-P_2S_5-LiX$, or a combination thereof, wherein X is a halogen element; $Li_2S-P_2S_5-Li_2O$, $Li_2S-P_2S_5-Li_2O-LiI$, $Li_2S-SiS_2$, $Li_2S-SiS_2-LiI$, $Li_2S-SiS_2-LiBr$, $Li_2S-SiS_2-LiCl$, $Li_2S-SiS_2-B_2S_3-LiI$, $Li_2S-SiS_2-P_2S_5-LiI$, $Li_2S-B_2S_3$, $Li_2S-P_2S_5-Z_mS_n$, or a combination thereof, wherein m and n each are a positive number, and Z is Ge, Zn or Ga; $Li_2S-GeS_2$, $Li_2S-SiS_2-Li_3PO_4$, $Li_2S-SiS_2-Li_pMO_q$, or a combination thereof, wherein p and q each are a positive number and M is P, Si, Ge, B, Al, Ga or In; $Li_{7-x}PS_{6-x}Cl_x$, wherein $0 \leq x \leq 2$; $Li_{7-x}PS_{6-x}Br_x$, wherein $0 \leq x \leq 2$; $Li_{7-x}PS_{6-x}I_x$, wherein $0 \leq x \leq 2$, or a combination thereof. The sulfide-based solid electrolyte may be prepared by treating starting materials, such as $Li_2S$ and $P_2S_5$, by a method such as melt-quenching, mechanical milling, and the like. In addition, after such a treatment, a heat-treatment may be conducted. The sulfide-based solid electrolyte may be amorphous or crystalline, or may be in a mixed state thereof.

In particular, the sulfide-based solid electrolyte may be, among the sulfide-based solid electrolyte materials described herein, a material that contains at least sulfur (S), phosphorus (P), and lithium (Li), as its constitutive elements. For example, the sulfide-based solid electrolyte may be a material including $Li_2S-P_2S_5$. Here, when using a sulfide-based solid electrolyte material containing $Li_2S$-$P_2S_5$, a mixing molar ratio of $Li_2S$ and $P_2S_5$ may be, for example, in a range of $Li_2S$ : $P_2S_5$ = about 50:50 to about 90:10.

The sulfide-based solid electrolyte may contain a compound represented by Formula 4:

Formula 4 $\quad\quad Li_aM1_xPS_yM2_zM3_w$

in Formula 4, M1 may be at least one metal element, other than Li, of Groups 1 to 15 in the Periodic Table, M2 may be at least one element of Group 17 in the Periodic Table,

M3 may be $SO_n$, and $4\leq a\leq 8$, $0<x<1$, $3\leq y\leq 7$, $0<z\leq 5$, $0\leq w<2$, and $1.5\leq n\leq 5$ may be satisfied. "Group" means a group of the Periodic Table of the Elements according to the International Union of Pure and Applied Chemistry ("IUPAC") Group 1-18 group classification system.

In Formula 4, $0<z\leq 5$, $0<z\leq 4$, $0<z\leq 3$, $0<z\leq 2$, $0.2\leq z\leq 1.8$, $0.5\leq z\leq 1.8$, $1.0\leq z\leq 1.8$, or $1.0\leq z\leq 1.5$ may be satisfied.

In Formula 1, $5\leq a\leq 8$, $0\leq x\leq 0.7$, $4\leq y\leq 7$, $0<z\leq 2$ and $0\leq w\leq 0.5$ may be satisfied, for example, $5\leq a\leq 7$, $0\leq x\leq 0.5$, $4\leq y\leq 6$, $0<z\leq 2$ and $0\leq w\leq 0.2$ may be satisfied. For example, $5.5\leq a\leq 7$, $0\leq x\leq 0.3$, $4.5\leq y\leq 6$, $0.2\leq z\leq 1.8$ and $0\leq w\leq 0.1$ may be satisfied, or $5.5\leq a\leq 6$, $0\leq x\leq 0.05$, $4.5\leq y\leq 5$, $1.0\leq z\leq 1.5$ and $0\leq w\leq 0.1$ may be satisfied.

In the compound represented by Formula 1, M1 may include, for example, Na, K, Mg, Ag, Cu, Hf, In, Ti, Pb, Sb, Fe, Zr, Zn, Cr, B, Sn, Ge, Si, Zr, Ta, Nb, V, Ga, Al, As, or a combination thereof. M1 may be, for example, a monovalent cation, or a divalent cation.

In the compound represented by Formula 1, M2 may include, for example, F, Cl, Br, I, or a combination thereof. M2 may be, for example, a monovalent anion.

In the compound represented by Formula 1, for example, $SO_n$ of M3 may be $SaOs$, $S_3O_6$, $S_2O_3$, $S_2O_4$, $S_2O_5$, $S_2O_6$, $S_2O_7$, $S_2O_3$, $SO_4$, $SO_5$, or a combination thereof. $SO_n$ may be, for example, a divalent anion. $SO_n^{2-}$ may be, for example, $S_4O_6^{2-}$, $S_3O_6^{2-}$, $S_2O_3^{2-}$, $S_2O_4^{2-}$, $S_2O_5^{2-}$, $S_2O_6^{2-}$, $S_2O_7^{2-}$, $S_2O_8^{2-}$, $SO_4^{2-}$, $SO_5^{2-}$, or a combination thereof.

The compound represented by Formula 4 may be, for example, a compound selected from compounds represented by Formulas 4A to 4B:

Formula 4A $\quad\quad Li_aPS_yM2_z$

in the above formula, M2 may be an element of Group 17 in the Periodic Table, and $4\leq a\leq 8$, $3\leq y\leq 7$, and $0<z\leq 5$.

Formula 4B $\quad\quad Li_aPS_yM2_zM3_w$

in the above formula, M2 may be an element of Group 17 of the Periodic Table, M3 may be $SO_n$, and $4\leq a\leq 8$, $3\leq y\leq 7$, $0<z\leq 5$, $0<w<2$, and $1.5\leq n\leq 5$.

The compound represented by Formula 4B may be a compound that does not include M1 and includes M2 and M3,

In Formulas 4a and 4b, $0<z\leq 5$, $0<z\leq 4$, $0<z\leq 3$, $0<z\leq 2$, $0.2\leq z\leq 1.8$, $0.5\leq z\leq 1.8$, $1.0\leq z\leq 1.8$, or $1.0\leq z\leq 1.5$, may be satisfied. In Formulas 4a and 4b, for example, $5\leq a\leq 8$, $4\leq y\leq 7$, $0<z\leq 2$ and $0\leq w\leq 0.5$; $5.5\leq a\leq 7$, $4.5\leq y\leq 6$, $0.2\leq z\leq 1.8$ and $0\leq w\leq 0.1$; $0.5\leq z\leq 1.8$, or $1.0\leq z\leq 1.8$.

The compound represented by Formula 4 may be, for example, a compound represented by Formula 5:

Formula 5 $\quad\quad Li_{7-m\times v-z}M4_vPS_{6-z}M5_{z1}M6_{z2}$

in Formula 5, M4 may be Na, K, Mg, Ag, Cu, Hf, In, Ti, Pb, Sb, Fe, Zr, Zn, Cr, B, Sn, Ge, Si, Zr, Ta, Nb, V, Ga, Al, As, or a combination thereof, m may be an oxidation number of M4, M5 and M6 may be each independently F, Cl, Br, or I, and $0<v<0.7$, $0<z1<2$, $0\leq z2<1$, $0<z<2$, $z=z1+z2$, and $1\leq m\leq 2$.

For example, $0<v\leq 0.7$, $0<z1<2$, $0\leq z2\leq 0.5$, $0<z<2$, and $z=z1+z2$. For example, $0<v\leq 0.5$, $0<z1<2$, $0\leq z2\leq 0.5$, $0<z<2$, and $z=z1+z2$. For example, $0<v\leq 0.3$, $0<z1\leq 1.5$, $0\leq z2\leq 0.5$, $0.2\leq z\leq 1.8$, and $z=z1+z2$. For example, $0<v\leq 0.1$, $0<z1\leq 1.5$, $0\leq z2\leq 0.5$, $0.5\leq z\leq 1.8$, and $z=z1+z2$. For example, $0<v\leq 0.05$, $0<z1\leq 1.5$, $0\leq z2\leq 0.2$, $1.0\leq z\leq 1.8$, and $z=z1+z2$. M4 may be, for example, a single type of metal element or may be two different metal elements.

The compound represented by Formula 5 may include, for example, a single type of halogen element, or two different halogen elements.

The compound represented by Formula 4 may be, for example, a solid ion conductor compound represented by Formula 5a to 5f:

Formula 5a $\quad\quad\quad Li_{7-z}PS_{6-z}M5_{z1}M6_{z2}$

Formula 5b $\quad\quad\quad Li_{7-v-z}Na_vPS_{6-z}M5_{z1}M6_{z2}$

Formula 5c $\quad\quad\quad Li_{7-v-z}K_vPS_{6-z}M5_{z1}M6_{z2}$

Formula 5d $\quad\quad\quad Li_{7-v-z}Cu_vPS_{6-z}M5_{z1}M6_{z2}$

Formula 5e $\quad\quad\quad Li_{7-v-z}Mg_vPS_{6-z}M5_{z1}M6_{z2}$

Formula 5f $\quad\quad\quad Li_{7-v-z}Ag_vPS_{6-z}M5_{z1}M6_{z2}$

in the above formulas, M5 and M6 may be each independently F, Cl, Br, or I, and

$$0<v<0.7,\ 0<z1<2,\ 0\leq z2<1,\ 0<z<2,\ and\ z=z1+z2.$$

In Formulas 5a to 5f, $0<v\leq0.7$, $0<z1<2$, $0\leq z2\leq0.5$, $0<z<2$, and $z=z1+z2$; $0<v\leq0.5$, $0<z1<2$, $0\leq z2\leq0.5$, $0<z<2$, and $z=z1+z2$; $0<v\leq0.3$, $0<z1\leq1.5$, $0\leq z2\leq0.5$, $0.2\leq z\leq1.8$, and $z=z1+z2$; or $0<v\leq0.05$, $0<z1\leq1.5$, $0\leq z2\leq0.2$, $1.0\leq z\leq1.8$, and $z=z1+z2$ may be satisfied. For example, $0<v\leq0.05$, $0<z1\leq1.5$, $0\leq z2\leq0.2$, $1.0\leq z\leq1.5$, and $z=z1+z2$ may be satisfied. In Formula 5a, v=0.

The compound represented by Formula 4 may be, for example, a compound represented by any one of the formulas below:

$Li_{7-z}PS_{6-z}F_{z1}$, $Li_{7-z}PS_{6-z}Cl_{z1}$, $Li_{7-z}PS_{6-z}Br_{z1}$, $Li_{7-z}PS_{6-z}I_{z1}$, $Li_{7-z}PS_{6-z}F_{z1}Cl_{z2}$, $Li_{7-z}PS_{6-z}F_{z1}Br_{z2}$, $Li_{7-z}PS_{6-z}F_{z1}I_{z2}$, $Li_{7-z}PS_{6-z}Cl_{z1}Br_{z2}$, $Li_{7-z}PS_{6-z}Cl_{z1}I_{z2}$, $Li_{7-z}PS_{6-z}Cl_{z1}Fz2$, $Li_{7-z}PS_{6-z}Br_{z1}I_{z2}$, $Li_{7-z}PS_{6-z}Br_{z1}Fz2$, $Li_{7-z}PS_{6-z}Br_{z1}Clz2$, $Li_{7-z}PS_{6-z}I_{z1}Fz2$, $Li_{7-z}PS_{6-z}I_{z1}Cl_{z2}$, $Li_{7-z}PS_{6-z}I_{z1}Br_{z2}$, $Li_{7-v-z}Na_vPS_{6-z}F_{z1}$, $Li_{7-v-z}Na_vPS_{6-z}Cl_{z1}$, $Li_{7-v-z}Na_vPS_{6-z}Br_{z1}$, $Li_{7-v-z}Na_vPS_{6-z}I_{z1}$, $Li_{7-v-z}Na_vPS_{6-z}F_{z1}Cl_{z2}$, $Li_{7-v-z}Na_vPS_{6-z}F_{z1}Br_{z2}$, $Li_{7-v-z}Na_vPS_{6-z}F_{z1}I_{z2}$, $Li_{7-v-z}Na_vPS_{6-z}Cl_{z1}Br_{z2}$, $Li_{7-v-z}Na_vPS_{6-z}Cl_{z1}I_{z2}$, $Li_{7-v-z}Na_vPS_{6-z}Cl_{z1}F_{z2}$, $Li_{7-v-z}Na_vPS_{6-z}Br_{z1}I_{z2}$, $Li_{7-v-z}Na_vPS_{6-z}Br_{z1}F_{z2}$, $Li_{7-v-z}Na_vPS_{6-z}Br_{z1}Cl_{z2}$, $Li_{7-v-z}Na_vPS_{6-z}I_{z1}F_{z2}$, $Li_{7-v-z}Na_vPS_{6-z}I_{z1}Cl_{z2}$, $Li_{7-v-z}Na_vPS_{6-z}I_{z1}Br_{z2}$, $Li_{7-v-z}K_vPS_{6-z}F_{z1}$, $Li_{7-v-z}K_vPS_{6-z}Cl_{z1}$, $Li_{7-v-z}K_vPS_{6-z}Br_{z1}$, $Li_{7-v-z}K_vPS_{6-z}I_{z1}$, $Li_{7-v-z}K_vPS_{6-z}F_{z1}Cl_{z2}$, $Li_{7-v-z}K_vPS_{6-z}F_{z1}Br_{z2}$, $Li_{7-v-z}K_vPS_{6-z}F_{z1}I_{z2}$, $Li_{7-v-z}K_vPS_{6-z}Cl_{z1}Brz2$, $Li_{7-v-z}K_vPS_{6-z}Cl_{z1}I_{z2}$, $Li_{7-v-z}K_vPS_{6-z}Cl_{z1}Fz2$, $Li_{7-v-z}K_vPS_{6-z}Br_{z1}I_{z2}$, $Li_{7-v-z}K_vPS_{6-z}Br_{z1}F_{z2}$, $Li_{7-v-z}K_vPS_{6-z}Br_{z1}Cl_{z2}$, $Li_{7-v-z}K_vPS_{6-z}I_{z1}F_{z2}$, $Li_{7-v-z}K_vPS_{6-z}I_{z1}Cl_{z2}$, $Li_{7-v-z}K_vPS_{6-z}I_{z1}Br_{z2}$, $Li_{7-v-z}Cu_vPS_{6-z}F_{z1}$, $Li_{7-v-z}Cu_vPS_{6-z}Cl_{z1}$, $Li_{7-v-z}Cu_vPS_{6-z}Br_{z1}$, $Li_{7-v-z}Cu_vPS_{6-z}I_{z1}$, $Li_{7-v-z}Cu_vPS_{6-z}F_{z1}Cl_{z2}$, $Li_{7-v-z}Cu_vPS_{6-z}F_{z1}Br_{z2}$, $Li_{7-v-z}Cu_vPS_{6-z}F_{z1}I_{z2}$, $Li_{7-v-z}Cu_vPS_{6-z}Cl_{z1}Br_{z2}$, $Li_{7-v-z}Cu_vPS_{6-z}Cl_{z1}I_{z2}$, $Li_{7-v-z}Cu_vPS_{6-z}Cl_{z1}Fz2$, $Li7-v-zCu_vPS6-z}Br_{z1}I_{z2}$, $Li_{7-v-z}Cu_vPS_{6-z}Br_{z1}F_{z2}$, $Li_{7-v-z}Cu_vPS_{6-z}Br_{z1}Clz2$, $Li_{7-v-z}Cu_vPS_{6-z}I_{z1}Fz2$, $Li_{7-v-z}Cu_vPS_{6-z}I_{z1}Cl_{z2}$, $Li_{7-v-z}Cu_vPS_{6-z}I_{z1}Br_{z2}$, $Li_{7-v-z}Mg_vPS_{6-z}F_{z1}$, $Li_{7-v-z}Mg_vPS_{6-z}Cl_{z1}$, $Li_{7-v-z}Mg_vPS_{6-z}Br_{z1}$, $Li_{7-v-z}Mg_vPS_{6-z}I_{z1}$, $Li_{7-2v-z}Mg_vPS_{6-z}F_{z1}$, $Li_{7-2v-z}Mg_vPS_{6-z}Cl_{z1}$, $Li_{7-2v-z}Mg_vPS_{6-z}Br_{z1}$, $Li_{7-2v-z}Mg_vPS_{6-z}I_{z1}$, $Li_{7-2v-z}Mg_vPS_{6-z}F_{z1}Cl_{z2}$, $Li_{7-2v-z}Mg_vPS_{6-z}F_{z1}Brz2$, $Li_{7-2v-z}Mg_vPS_{6-z}F_{z1}I_{z2}$, $Li_{7-2v-z}Mg_vPS_{6-z}Cl_{z1}Br_{z2}$, $Li_{7-2v-z}Mg_vPS_{6-z}Cl_{z1}I_{z2}$, $Li_{7-2v-z}Mg_vPS_{6-z}Cl_{z1}Fz2$, $Li_{7-2v-z}Mg_vPS_{6-z}Br_{z1}I_{z2}$, $Li_{7-2v-z}Mg_vPS_{6-z}Br_{z1}F_{z2}$, $Li_{7-2v-z}Mg_vPS_{6-z}Br_{z1}Cl_{z2}$, $Li_{7-2v-z}Mg_vPS_{6-z}I_{z1}Fz2$, $Li_{7-2v-z}Mg_vPS_{6-z}I_{z1}Cl_{z2}$, $Li_{7-2v-z}Mg_vPS_{6-z}I_{z1}\ Br_{z2}$, $Li_{7-v-z}Ag_vPS_{6-z}F_{z1}$, $Li_{7-v-z}Ag_vPS_{6-z}Cl_{z1}$, $Li_{7-v-z}Ag_vPS_{6-z}Br_{z1}$, $Li_{7-v-z}Ag_vPS_{6-z}I_{z1}$, $Li_{7-v-z}Ag_vPS_{6-z}F_{z1}Cl_{z2}$, $Li_{7-v-z}Ag_vPS_{6-z}F_{z1}Br_{z2}$, $Li_{7-v-z}Ag_vPS_{6-z}F_{z1}I_{z2}$, $Li_{7-v-z}Ag_vPS_{6-z}Cl_{z1}Br_{z2}$, $Li_{7-v-z}Ag_vPS_{6-z}Cl_{z1}I_{z2}$, $Li_{7-v-z}Ag_vPS_{6-z}Cl_{z1}F_{z2}$, $Li_{7-v-z}Ag_vPS_{6-z}Br_{z1}I_{z2}$, $Li_{7-v-z}Ag_vPS_{6-z}Br_{z1}F_{z2}$, $Li_{7-v-z}Ag_vPS_{6-z}Br_{z1}Cl_{z2}$, $Li_{7-v-z}Ag_vPS_{6-z}I_{z1}F_{z2}$, $Li_{7-v-z}Ag_vPS_{6-z}I_{z1}Cl_{z2}$, and $Li_{7-v-z}Ag_vPS_{6-z}I_{z1}Br_{z2}$.

In the above formulas, $0<v\leq0.7$, $0<z1<2$, $0<z2<1$, $0<z<2$, and $z=z1+z2$ may be satisfied. For example, $0<v\leq0.7$, $0<z1<2$, $0<z2\leq0.5$, $0<z<2$, and $z=z1+z2$; $0<v\leq0.3$, $0<z1\leq1.5$, $0<z2\leq0.5$, $0.2\leq z\leq1.8$ and $z=z1+z2$; $0<v\leq0.05$, $0<z1\leq1.5$, $0<z2\leq0.2$, $1.0\leq z\leq1.8$ and $z=z1+z2$; or $0<v\leq0.05$, $0<z1\leq1.5$, $0<z2\leq0.2$, $1.0\leq z\leq1.5$ and $z=z1+z2$ may be satisfied. In the above formulas, if v, z1 or z2 is absent, v=0, z1=0 or z2=0. For example, if z1=0, then z=z2. For example, if z2=0, then z=z1.

The compound represented by Formula 4 may belong to, for example, a cubic crystal system, and may more specifically belong to F-43m space group. Also, as described above, the compound represented by Formula 4 may be an argyrodite-type sulfide having an argyrodite-type crystal structure. In the compound represented by Formula 4, some of lithium site in an argyrodite-type crystal structure is substituted by a monovalent cation element, a divalent cation element, or a combination thereof. The compound represented by Formula 4 may include different types of halogen elements, or a substituted $SO_n$ anion in the halogen site. The compound represented by Formula 4 has improved lithium ion conductivity and improved electrochemical stability with respect to lithium metal.

The compound represented by Formula 4 may be, for example, $Li_6PS_5Cl$.

In the present specification, the sulfide-based solid electrolyte may be an argyrodite-type compound including $Li_{7-x}PS_{6-x}Cl_x$ wherein $0 \leq x \leq 2$, $Li_{7-x}PS_{6-x}Br_x$ wherein $0 \leq x \leq 2$, $Li_{7-x}PS_{6-x}I_x$ wherein $0 \leq x \leq 2$, or a combination thereof. In particular, the sulfide-based solid electrolyte included in the solid electrolyte may include an argyrodite-type compound including $Li_5PS_5Cl$, $Li_6PS_5Br$, $Li_5PS_5I$, or a combination thereof.

The sulfide-based solid electrolyte may be in the form of powder or a molded product. For example, the solid electrolyte in the form of a molded product may be in the form of a pellet, a sheet, a thin film, or the like, but without being limited thereto, may be in various forms depending on the intended purpose of use.

Examples of the polymer electrolyte may include a polyethylene oxide, a polypropylene oxide, polystyrene (PS), a polyphosphazene, a polysiloxane, polyvinylidene fluoride-co-hexafluoropropylene (PVDF-HFP), polyacrylonitrile (PAN), or a combination thereof.

A solid electrolyte 30 may further include a binder, for example. Examples of the binder included in the solid electrolyte layer 30 may include styrene butadiene rubber (SBR), polytetrafluoroethylene, polyvinylidene fluoride, polyethylene, and the like. However, the binder is not limited to the aforementioned materials and may be any binder available in the art. The binder in the solid electrolyte 30 may be the same binder or a different type of binder than the binder included in the cathode active material layer 12 and the anode active material layer.

In the anode-solid electrolyte sub-assembly 25, the anode current collector 21 may comprise, for example, a material that does not react with lithium, that is, does not form an alloy or compound. Examples of the material forming the anode current collector 21 may include copper (Cu), stainless steel, titanium (Ti), iron (Fe), cobalt (Co), nickel (Ni), and the like. However, the material is not necessarily limited to the aforementioned components and may be any suitable material available for use as an electrode current collector in the relevant technical field. The anode current collector 21 may consist of one of the aforementioned metals, or an alloy of two or more metals thereof, or a coating material. The anode current collector 21 may be, for example, a plate shape or a foil shape.

Hereinbelow, a method of preparing an all-solid secondary battery according to an embodiment is described in detail.

According to a first preparation method, the preparation method starts with providing a mixed ionic-electronic conductor (MIEC) structure which contains a MIEC and has a plurality of opening portions extending along a thickness direction and having a structure in which at least one end is open.

The MIEC structure may include a plurality of vertical open pores.

The preparation method with vertical TiN tubes as the MIEC structure as an example will be described below. TiN nanotubes may be prepared by an anodic oxidation method, for example.

When preparing TiN tubes by an anodic oxidation method, it is possible to control the pore size of TiN tubes by changing an operating voltage, etc. and it is also possible to modify a thickness of TiN nanotubes by changing the content of distilled water, etc. used to prepare an electrolyte for use during the preparation process.

Subsequently, disposing of an interlayer on the MIEC structure to prepare the MIEC structure with the interlayer disposed thereon may be conducted.

The disposing of the interlayer on the MIEC structure may comprise various methods, including a slurry coating method, a transfer method, and the like. When the interlayer is prepared by the slurry coating method, an interlayer material is supplied to at least a portion of pores in the MIEC structure, thus forming a first interlayer. As such, when the first interlayer is formed within the pores, bonding strength between the MIEC structure and the interlayer may be superior to when the first interlayer is not formed within the pores.

Next steps comprise disposing the MIEC structure with the interlayer disposed thereon on an anode current collector to thereby prepare an anode in which the anode current collector, the MIEC structure, and the interlayer are sequentially disposed,

forming an anode-solid electrolyte sub-assembly by arranging a solid electrolyte on the anode, and
arranging a cathode on the other side of the solid electrolyte of the anode-solid electrolyte sub-assembly.

The preparing of the MIEC structure with the interlayer disposed thereon by arranging the interlayer on the MIEC structure may comprise a transfer or coating method.

If the first preparation method is to be followed, the solid electrolyte may utilize, for example, a sulfide-based solid electrolyte.

An all-solid secondary battery according to another embodiment may be prepared by a second preparation method described below. This preparation method may start by preparing a MIEC structure which contains a mixed conductor and has a plurality of opening portions extending along a thickness direction and having a structure in which at least one end is open.

Subsequently, the preparation method may include preparing a solid electrolyte/interlayer laminate by disposing an interlayer on a solid electrolyte using an interlayer material; preparing a solid electrolyte/interlayer/MIEC structure laminate by disposing a MIEC structure on the interlayer of the solid electrolyte/interlayer laminate; forming an anode-solid electrolyte sub-assembly by disposing an anode current collector on the MIEC structure of the solid electrolyte/interlayer/MIEC structure laminate; and disposing a cathode on the other side of the solid electrolyte of the anode-solid electrolyte sub-assembly. In this preparation method, the solid electrolyte used may be an oxide-based solid electrolyte, a sulfide-based solid electrolyte, or the like.

The bonding strength between the MIEC structure and the interlayer may be superior when the first preparation method is followed.

In an aspect, a method of preparing an all-solid secondary battery comprises: providing a mixed ionic-electronic conductor structure, the mixed ionic-electronic conductor structure comprising a mixed ionic-electronic conductor, and having a plurality of openings extending along a thickness direction, wherein the plurality of openings has a structure in which at least one end is open; disposing an interlayer on the mixed ionic-electronic conductor structure to prepare the mixed ionic-electronic conductor structure with the interlayer disposed thereon; disposing the mixed ionic-electronic conductor structure with the interlayer disposed thereon on an anode current collector to prepare a laminate, wherein the mixed ionic-electronic conductor structure is between the interlayer and the anode current collector; disposing the solid electrolyte on the interlayer of the laminate and opposite the mixed ionic-electronic conductor structure to form an anode-solid electrolyte sub-assembly; and disposing a cathode on the solid electrolyte of the anode-solid electrolyte sub-assembly and opposite the anode to prepare the all-solid secondary battery.

The interlayer 23 may include a carbon anode active material and a second metal, a metalloid, or a combination thereof.

For example, the interlayer may be formed through coating and drying, on a MIEC, an interlayer forming composition containing a carbon anode active material, and/or a carbon anode active material and a second metal (M2), a metalloid, or a combination thereof.

According to another embodiment, the interlayer may be prepared through coating and drying the interlayer forming composition on a first substrate that is not an anode current collector, and then disposing the product obtained therefrom on an anode current collector and separating the first substrate therefrom.

The first substrate may be composed of a material that does not react with lithium, that is, a material that does not form an alloy or a compound with lithium. Examples of the material forming a substrate may include, but are not limited to copper (Cu), stainless steel, titanium (Ti), iron (Fe), cobalt (Co), nickel (Ni), and the like, and may be any suitable material available as an electrode current collector in the art. The first substrate be composed of one of the aforementioned metals, or an alloy of two or more metals thereof, or a coating material. The first substrate may be, for example, in a plate shape or a foil shape. For example, the first substrate may be a stainless steel substrate.

Providing of a first metal thin film between the MIEC structure and the interlayer may be further included.

Providing of a second metal thin film between the interlayer and the solid electrolyte may be further included.

A thickness of the thin film may be, for example, about 1 nm to about 800 nm, about 10 nm to about 700 nm, about 50 nm to about 600 nm, or about 100 nm to about 500 nm. If the thickness of the thin film is less than 1 nm, the function as a thin film may be difficult to achieve. When the thickness of the thin film is excessively large, it causes the thin film to absorb lithium by itself, decreasing the amount of lithium precipitated at the anode. As a result, the all-solid battery may have decreased energy density and cycling characteristics of an all-solid secondary battery may deteriorate. However, without being limited to the aforementioned methods, any suitable method available in the art that is capable of forming a thin film may be used.

When preparing the all-solid secondary battery, disposing (e.g., bonding) may be a press compaction process. During the press process, some of lithium may be inserted into the interlayer. As a result, the interlayer may include a carbon active material and lithium, or may contain a composite including a lithium-second metal (M2) alloy.

According to another embodiment, during the charging process or disposing process of an all-solid secondary battery, or during both of the aforementioned processes, lithium metal or a lithium metal alloy may be precipitated in the vertical open pores.

A pressure applied during the press or compression may be, for example, about 150 MPa or greater. The pressure applied during the pressing may be about 250 MPa or greater, for example. For example, the pressure applied during the press or compression may be about 150 MPa to about 10,000 MPa, about 300 MPa to about 5,000 MPa, or about 500 MPa to about 2,000 MPa.

The duration for which the pressure is applied may be 10 minutes or less. For example, the duration for which the pressure is applied may be about 5 milliseconds (ms) to about 10 minutes (min). For example, the duration for which the pressure is applied may be about 2 minutes to about 7 minutes.

The press may be conducted, for example, at room temperature (25 °C). For example, the press may be conducted at about 15 °C to about 25 °C. However, the temperature at which the pressure is applied is not necessarily limited to the aforementioned examples, and may be a temperature of about 25 °C to about 90 °C, or a high temperature of about 100 °C or greater, for example, about 100 °C to about 500 °C.

The press may be conducted by techniques such as roll press, uni-axial pressing, flat press, warm isostatic pressing (WIP), cold isostatic pressing (CIP), and the like. However, the press is not necessarily limited to the aforementioned techniques and may be any suitable press technique available in the art.

During the charging process or disposition process of the all-solid secondary battery, or during both of the aforementioned processes, the second metal in the interlayer may form an alloy with lithium.

(Preparation of Cathode)

Materials forming a cathode active material 12, including a cathode active material, a binder, and the like, may be added to a nonpolar solvent to produce a slurry. The produced slurry may be coated and dried on a cathode current collector 11. The laminate obtained therefrom may be pressed to produce a cathode 10. The press may be conducted by a method using a roll press, a flat press, a hydrostatic pressure, or the like, but without being necessarily limited to the aforementioned methods, and may be any suitable press method available in the art. The press process may be omitted. A mixture of materials forming the cathode active material layer 12 may be compacted in a pellet form, or may be stretched (molded) into a sheet form to thereby produce the cathode 10. When the cathode 10 is prepared as described above, the cathode current collector 11 may be omitted. Alternatively, the cathode 10, before use, may be impregnated with an electrolyte solution.

(Preparation of Solid Electrolyte)

A solid electrolyte 30 including an oxide-based solid electrolyte may be prepared, for example, by heat-treating a precursor of an oxide-based solid electrolyte material.

The oxide-based solid electrolyte may be prepared by bringing precursors in contact with one another in a stoichiometric amount to form a mixture, and then heat-treating the mixture. The contacting may be conducted by, for example, pulverization or milling such as ball milling. A product of the first heat-treatment may be prepared by performing a first heat-treatment on a mixture of precursors of a stoichiometric composition under an oxidizing atmosphere. The first heat-treatment may be conducted at a temperature of about 1,000 °C or less, for about 1 hour to about 36 hours. The product of the first heat-treatment may be pulverized. The pulverization of the product of the first heat-treatment may be carried out in a dry or wet manner. The wet pulverization may be conducted, for example, by mixing the product of the first heat-treatment with a solvent e.g., methanol, and then milling the resulting mixture by a ball mill, or the like, for about 0.5 hours to about 10 hours. Dry pulverization may be conducted by milling, using a ball mill, or the like, without solvent. The pulverized product of the first heat-treatment may have an average particle diameter of about 0.1 $\mu$m to about 10 $\mu$m, or about 0.1 $\mu$m to about 5 $\mu$m. The pulverized product of the first heat-treatment may be dried. The pulverized product of the first heat-treatment may be mixed with a binder solution and molded into pellets, or may be simply pressed with a pressure of about 1 ton to about 10 tons and molded into pellets.

The molded product may be subjected to a second heat-treatment at a temperature of less than or equal to about 1,000 °C, for about 1 hour to about 36 hours. The second heat-treatment may produce a solid electrolyte layer 30, which is a sintered product. The second heat-treatment may be conducted at a temperature of about 550 °C to about 1,000 °C, for example. The duration of the second heat-treatment may be about 1 hour to about 36 hours. To obtain a sintered product, the temperature of the second heat-treatment may be higher than the temperature of the first heat-treatment. For example, the temperature of the second heat-treatment may be higher than the temperature of the first heat-treatment, by 10 °C or greater, 20 °C or greater, 30 °C or greater, or 50 °C greater. The molded product may be subjected to a second heat-treatment under at least one of an oxidizing atmosphere and a reducing atmosphere. The second heat-treatment may be conducted in a) an oxidizing atmosphere, b) a reducing atmosphere, or c) an oxidizing atmosphere and a reducing atmosphere.

(Preparation of All-Solid Secondary Battery)

An all-solid secondary battery may be prepared by depositing the cathode 10 and the anode-solid electrolyte assembly 26 prepared above, and then pressing the laminate.

The press may be conducted by techniques such as roll pressing, uni-axial pressing, flat pressing, warm isostatic pressing (WIP), cold isostatic pressing (CIP), and the like. However, without being limited to the aforementioned techniques, any suitable press technique available in the art may be used. A pressure applied during the press may be about 50 MPa to about 750 MPa, for example. The duration for which the pressure is applied may be about 5 milliseconds to about 5 minutes. The press may be conducted, for example, at room temperature, a temperature of 90 °C or less, or a temperature of about 20 °C to about 90 °C. Alternatively, the press may be conducted at a high temperature of 100 °C or greater.

Next, the cathode 10 may be disposed, e.g., bonded to the other side of the solid electrolyte 30 by disposing the cathode 10 on the other side of the solid electrolyte 30 bonded to the anode 20, followed by pressing with a predetermined pressure. Alternatively, with the cathode 10 impregnated with a liquid electrolyte, a battery may be prepared by deposition alone without pressing.

The press may be conducted by techniques such as roll pressing, uni-axial pressing, flat pressing, warm isostatic pressing (WIP), cold isostatic pressing (CIP), and the like. However, the press is not necessarily limited to the aforementioned techniques and may be any suitable press method available in the art. A pressure applied during the press may be about 50 MPa to about 750 MPa, for example. The duration for which the pressure is applied may be about 5 milliseconds to about 5 minutes. The press may be conducted, for example, at room temperature, a temperature of 90 °C or less, or a temperature of about 20 °C to about 90 °C. Alternatively, the press may be conducted at a high temperature of 100 °C or greater.

According to another embodiment, a battery may include a cathode and an anode-solid electrolyte sub-assembly according to an embodiment, disposed on the cathode, wherein the solid electrolyte is disposed between the cathode and an anode.

The cathode may contain a liquid electrolyte.

The anode-solid electrolyte sub-assembly is the same as the above-described anode-solid electrolyte sub-assembly for an all-solid battery.

The present inventive concept will be described in greater detail through the following examples and comparative examples. However, it will be understood that the examples are provided only to illustrate the present inventive concept and not to be construed as limiting the scope of the present inventive concept.

EXAMPLES

(Preparation of MIEC Structure)

Preparation Example 1: Preparation of TiN Nanotubes

TiN nanotubes were prepared by an anodic oxidation method. In particular, 0.5 wt% of ammonium fluoride ($NH_4F$)(Sigma-Aldrich, ≥98%) was added to an ethylene glycol solvent (Sigma-Aldrich, 99.8%, anhydrous) containing 3 vol% of distilled water, and the resulting mixture was stirred to produce an electrolyte. With the electrolyte, using a 0.25 millimeter (mm)-thick Ti foil (Thermo scientific, 99.5%) as working electrode, and a Pt foil as counter electrode, anodic oxidation was performed for 1 hour at a working voltage of 60 V to form a first $TiO_2$ nanotube electrode. Subsequently, the first $TiO_2$ was removed and a second $TiO_2$ was formed under the same conditions. The second $TiO_2$ (which is anatase) electrode was heat-treated at 800 °C for 1 hour under $NH_3$ (99.999%) atmosphere, to form a TiN nanotube electrode.

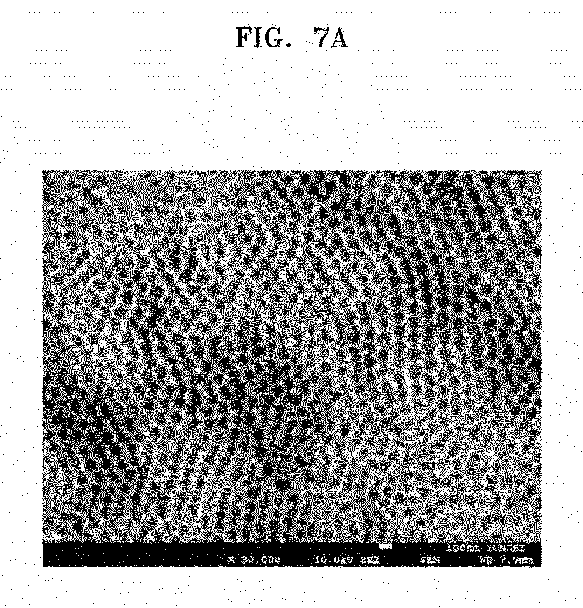

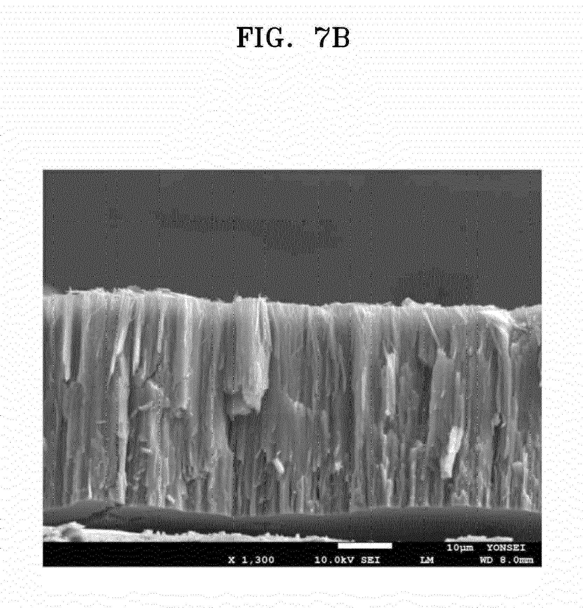

The TiN nanotube electrode as shown in FIG. 7A had an average pore diameter of 100 nm and as shown in FIG. 7B, had an average thickness of 40 μm, and had a structure in which one end is closed.

Preparation Example 2

A TiN nanotube electrode was prepared following the same process as Preparation Example 1, except that the operating voltage was changed so as to control the average diameter of pores and the thickness of MIEC structure as shown in Table 1, and the content of distilled water used to prepare the electrolyte was changed to 2 vol%.

Preparation Example 3

A TiN nanotube electrode was prepared following the same process as Preparation Example 1, except that the operating voltage was changed so as to control the average diameter of pores and the thickness of MIEC structure as shown in Table 1, and the content of distilled water used to prepare the electrolyte was changed to 2.5 vol%.

Preparation Example 4

A TiN nanotube electrode was prepared following the same process as Preparation Example 1, except that the operating voltage was changed to about 40 V so as to control the average diameter of pores and the thickness of MIEC structure as shown in Table 1.

Preparation Example 5

A TiN nanotube electrode was prepared following the same process as Preparation Example 1, except that the operating voltage was changed to about 50 V so as to control the average diameter of pores and the thickness of MIEC structure as shown in Table 1.

[Table 1]

| Item | Average diameter of pores of MIEC structure (nm) | Thickness of MIEC structure ($\mu$m) | Average diameter of pores of interlayer (Ag/C) (nm) |
|---|---|---|---|
| Preparation Example 1 | 100 | 40 | 50 |
| Preparation Example 2 | 120 | 15 | 50 |
| Preparation Example 3 | 120 | 25 | 50 |
| Preparation Example 4 | 65 | 5 | 50 |
| Preparation Example 5 | 90 | 10 | 50 |
| The average diameters of pores and the thicknesses in Table 1 were identified by SEM analysis. | | | |

(Preparation of Solid-State Secondary Battery)

Example 1: Using Sulfide-Based Solid Electrolyte

(Preparation of Anode-Solid Electrolyte Sub-Assembly)

A 600 $\mu$m-thick pellet made of $Li_6PS_5Cl$ sulfide-based solid electrolyte was used as a solid electrolyte.
3 grams of carbon black (CB) having an average particle diameter of about 38 nm as a carbon material and 1 gram of silver (Ag) particles having an average particle diameter of about 100 nm were mixed together and combined with a mixture obtained by mixing 2.692 grams of a PVA-PAA binder solution (Solvay Specialty Polymers. Solef 5130) with 7 grams of NMP (N-methyl-2-pyrrolidone), and the resulting mixture was subjected to first stirring at 1,000 rpm for 30 minutes to produce a slurry. This slurry was coated on the TiN nanotubes prepared in Preparation Example 1 and dried at room temperature (25 °C) for 1 hour, followed by vacuum-drying at 120 °C for 2 hours, thereby forming an interlayer (AgC layer) having a thickness about 10 $\mu$m, to thereby produce a MIEC structure/interlayer laminate.
The MIEC structure/interlayer laminate was disposed on a 10 $\mu$m-thick copper (Cu) foil as an anode current collector to form an anode. The solid electrolyte was disposed on the interlayer of the anode, thereby forming an anode-solid electrolyte sub-assembly. The volume of the pores in the anode-solid electrolyte sub-assembly was controlled in accordance with a cathode capacity.

(Preparation of Cathode)

$LiNi_{0.7}Co_{0.15}Al_{0.15}O_2$ (NCA) (D50 = 12 $\mu$m) as a cathode active material, carbon nanofibers as a conducting agent, and $Li_5PS_5Cl$ (D50 = 5 $\mu$m) as a solid electrolyte were mixed together and combined with xylene to form a cathode slurry. The formed cathode slurry was formed into a sheet to produce a cathode sheet. The mixing weight ratio of cathode active material: conductive agent: sulfide-based solid electrolyte was 85:2:15. The cathode sheet was used as a cathode. The cathode capacity was 4. 1 mAh/cm$^2$.

(Preparation of All-Solid Secondary Battery)

The solid electrolyte of the anode-solid electrolyte sub-assembly was disposed on the cathode, and by performing a pressing at 25 °C with a pressure of 300 MPa using a warm isostatic press (WIP), a disc-shaped all-solid secondary battery having a diameter of 13 mm was produced.

Example 2: Using Oxide-Based Solid Electrolyte

A 350 $\mu$m-thick LLZTO (Li6.5La3Zr1.5Ta0.5O12) pellet was pre-treated by the following process and used as a solid electrolyte.

The LLZTO pellet was treated by dipping in 1M hydrochloric acid (HCl) for 10 minutes. Subsequently, the product dipped in HCl was washed with ethanol and dried in a dry room (dew point -50 °C) for 10 minutes.

3 grams of carbon black (CB) having an average particle diameter of about 38 nm as a carbon material and 1 gram of silver (Ag) particles having an average particle diameter of about 100 nm were mixed together and combined with a mixture obtained by mixing 2.692 grams of a polyvinyl alcohol-polyacrylic acid (PVA-PAA) binder solution (Solvay Specialty Polymers. Solef 5130) with 7 grams of NMP (N-methyl-2-pyrrolidone), and the resulting mixture was subjected to first stirring at 1,000 rotation per minute (rpm) for 30 minutes to produce a slurry. This slurry was coated on the solid electrolyte and dried at room temperature (25 °C) for 1 hour and then vacuum-dried at 80 °C for 30 minutes, thereby forming an interlayer to produce a solid electrolyte/interlayer laminate.

The TiN tubes of Preparation Example 1 as MIEC structures were attached on the interlayer of the solid electrolyte/interlayer laminate, and pressed with 250 MPa at 25 °C by cold isostatic pressing (CIP) to produce a MIEC structure/interlayer/solid electrolyte laminate.

The MIEC structure/interlayer/solid electrolyte laminate was disposed on a 10 $\mu$m-thick copper (Cu) foil as an anode current collector, thereby forming an anode-solid electrolyte sub-assembly.

(Preparation of Cathode)

LiNi$_{0.33}$Co$_{0.33}$Mn$_{0.33}$O$_2$ (NCM) was prepared as a cathode active material. Also, polytetrafluoroethylene (manufactured by Du Pont, TEFLON® binder) was prepared as a binder. Here, the binder was used as a solution form, being dissolved in NMP in a concentration of 5 wt%. In addition, Denka Black (DB) was prepared as a conductive aid. Then, the aforementioned materials were mixed in a weight ratio of cathode active material: conductive aid : binder = 100 : 2 : 1 to produce a slurry-type mixture. The produced slurry was coated on a cathode current collector made of an 18 $\mu$m-thick aluminum foil, followed by drying at 120 °C for 12 hours, and then compressed to produce a cathode. A cathode active material layer of the cathode thus produced was immersed in an electrolyte solution containing 2.0 M of lithium bis(fluorosulfonyl)imide (LiFSI) dissolved in ionic liquid PYR13FSI (N-propyl-N-methyl-pyrrolidinium bis(fluorosulfonyl)imide).

(Preparation of all Solid Secondary Battery)

The cathode was placed in a stainless steel (SUS) cap such that the cathode active material layer immersed in the ionic liquid-containing electrolyte solution faces upward. The anode-solid electrolyte sub-assembly was disposed, placing the solid electrolyte layer on the cathode active material layer, and then sealed to thereby produce an all-solid secondary battery. The cathode and anode were insulated by an insulating material. Parts of the cathode current collector and anode current collector were taken out of the sealed battery and used as a cathode layer terminal and an anode layer terminal.

Example 3-6

An all-solid secondary battery was prepared following the process as Example 1, except that the TiN nanotubes prepared in Preparation Examples 2 to 5 were used respectively as the MIEC during the preparation of the anode-solid electrolyte sub-assembly.

Example 7

An all-solid secondary battery was prepared following the same process as Example 1, except that when preparing the interlayer, 4 grams of carbon black (CB) having an average particle diameter of about 38 nm were used instead of 3 grams of carbon black (CB) having an average particle diameter of about 38 nm, and 1 gram of silver (Ag) particles having an average particle diameter of about 100 nm.

Comparative Example 1: All-Solid Secondary Battery (Using Sulfide-Based Solid Electrolyte: No MIEC Structure)

(Preparation of Anode-Solid Electrolyte Sub-Assembly)

A 600-$\mu$m pellets made of Li$_6$PS$_5$Cl sulfide-based solid electrolyte was used as a solid electrolyte.

3 grams of carbon black (CB) having an average particle diameter of about 38 nm as a carbon material and 1 gram of silver (Ag) particles having an average particle diameter of about 100 nm were mixed together and combined with a mixture obtained by mixing 2.692 grams of a PVA-PAA binder solution (Solvay Specialty Polymers. Solef 5130) with 7 grams of NMP (N-methyl-2-pyrrolidone), and the resulting mixture was subjected to first stirring at 1,000 rpm for 30 minutes to produce a slurry. This slurry was bar-coated on a stainless steel substrate and dried for 1 hour at room temperature (25 °C), followed by vacuum-drying for 12 hours, to produce an interlayer.

The interlayer was deposed on a 10 μm-thick copper (Cu) foil, serving as an anode current collector, and the stainless-steel substrate was removed therefrom to form an interlayer on the anode current collector.

The anode current collector having the interlayer formed thereon was placed on the solid electrolyte.

Except for the above, the all-solid-state secondary battery of Comparative Example 1 was manufactured in the same manner as the manufacturing method of the all-solid-state secondary battery of Example 1.

In the all-solid secondary battery prepared according to Comparative Example 1, a lithium metal precipitation layer was formed between the anode current collector and the interlayer throughout charging.

Comparative Example 2: All-Solid Secondary Battery (No AgC Interlayer)

An all-solid secondary battery was prepared following the same process as Example 1, except that the interlayer was not deposited on the MIEC structure.

Comparative Example 3: All-Solid Secondary Battery (with AgC layer formed between MIEC structure and anode current collector)

An all-solid secondary battery was prepared following the same process as Example 1, except that the interlayer was not deposited on the MIEC structure, and the interlayer (AgC layer) was disposed between the anode current collector and MIEC structure.

Evaluation Example 1: SEM Analysis

SEM analysis was performed on TiN nanotubes according to Preparation Example 1. The results of the analysis are shown in FIG. 7A and FIG. 7B.

As shown in FIG. 7A and FIG. 7B, it was found that the TiN nanotubes prepared according to Preparation Example 1 have a structure having an average pore diameter of about 100 nm and an average thickness of about 40 μm.

Evaluation Example 2: Charge-Discharge Characteristics I

The all-solid secondary batteries of Example 1, Comparative Example 1, Comparative Example 2, and Comparative Example 3 were evaluated as follows to investigate charge-discharge profile characteristics.

The all-solid secondary battery was charged at a current of 0.1C in a constant current until the voltage reached 4.3 V (vs. Li), and then cut-off was performed at a current of 0.05C while maintaining 4.3 V in constant voltage mode. Subsequently, the discharge was performed at a constant current of 0.1C rate until the voltage reached 2.85V (vs. Li) (formation).

The all-solid secondary battery after the formation cycle was charged at 25 °C at a constant current of 0.1C rate until the battery voltage reached 4.3 V (vs. Li). Subsequently, each battery was discharged at a constant current of 0.1C rate until the battery voltage reached 2.85 V (vs. Li) during discharging. The C rate is a discharge rate of a cell, and is obtained by dividing a total capacity of the cell by a total discharge period of time of 1 hour, e.g., a C rate for a battery having a discharge capacity of 1.6 ampere-hours would be 1.6 amperes. The total capacity is determined by a discharge capacity on the 1st cycle. 0.1 C or C/10 refers to a current that will fully discharge the battery in 10 hours.

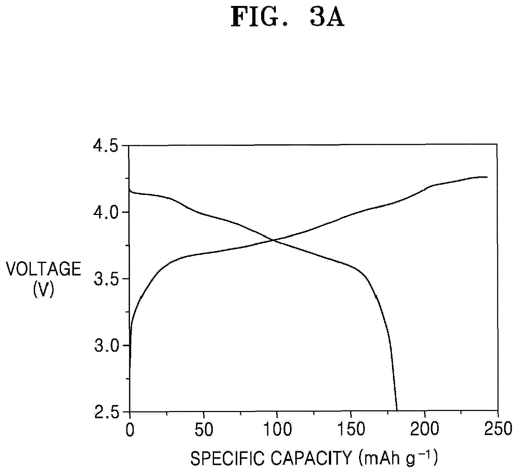

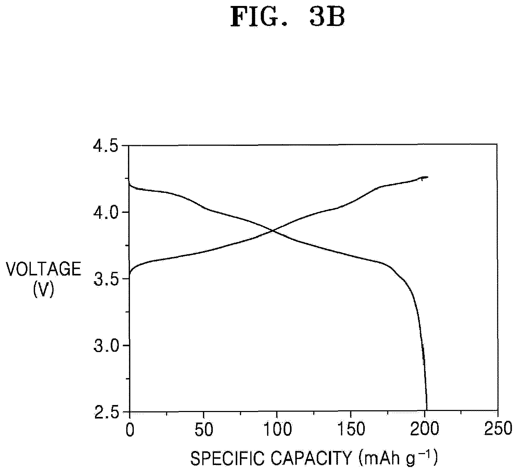

The all-solid secondary batteries of Example 1, Comparative Example 1, Comparative Example 2, and Comparative Example 3 were evaluated for voltage changes according to specific capacity after charging and discharging, and the results thereof are shown in FIGS. 3A to 3D.

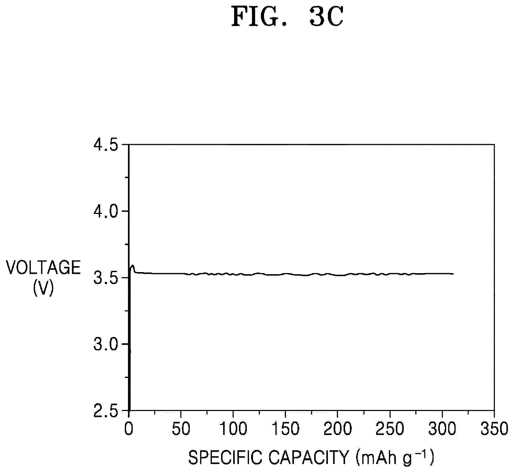

As shown in FIG. 3C, in the all-solid secondary battery of Comparative Example 2, using TiN MIEC structures alone without AgC layer serving as the interlayer, a micro short circuit with no voltage increase during charging occurred, thus making a normal cell operation difficult. This result can be attributed to the fact that the use of TiN tubes alone allows an electrical current to crowd at a contact surface between the electrolyte and the TiN tubes, which gives rise to formation of Li dendrites and a short-circuit.

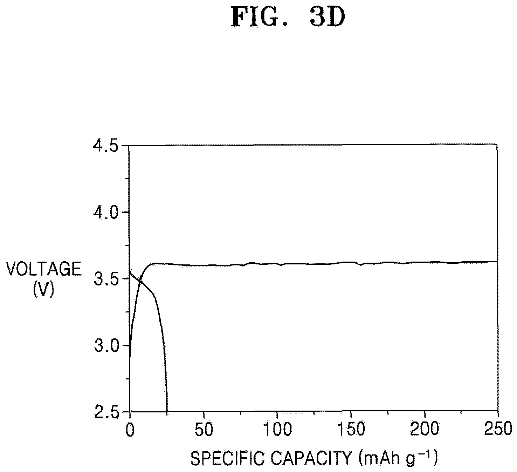

The all-solid secondary battery of Comparative Example 3 was found to have a structure in which the AgC layer is directly deposited on the anode current collector, and in this case also, the occurrence of a micro short circuit during charging was observed as shown in FIG. 3D.

Meanwhile, the all-solid secondary battery of Example 1 was charged and discharged as shown in FIG. 3A. In a case in which a AgC layer was formed on the TiN tubes, charging and discharging were conducted while an electrical current was dispersed to suppress Li growth on the tips. Therefore, it can be seen that it is necessary that the AgC layer be formed between the electrolyte and the MIEC structure in a strain-free anode precipitating Li in tube structures.

In addition, the charge-discharge characteristics of the all-solid secondary batteries of Examples 3 to 8 were evaluated following the same process used to evaluate the charge-discharge characteristics of the all-solid battery of the all-solid secondary battery of Example 1.

From the results of evaluation, the all-solid secondary batteries of Examples 3 to 8 were found to have normal charging and discharging.

Evaluation Example 3: Changes in Thickness and Pressure

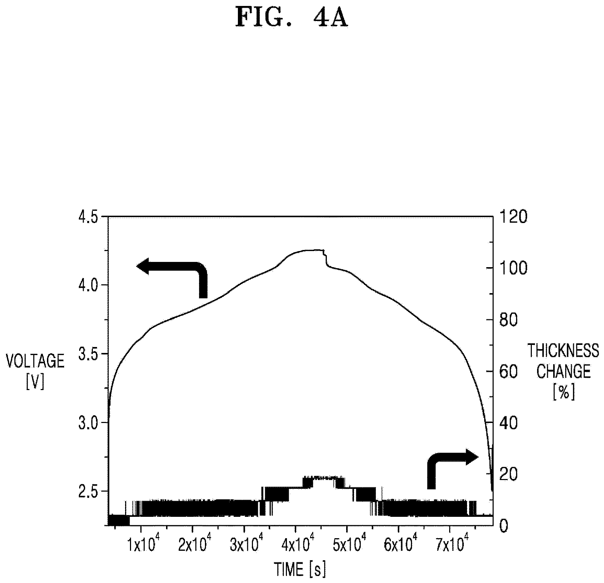

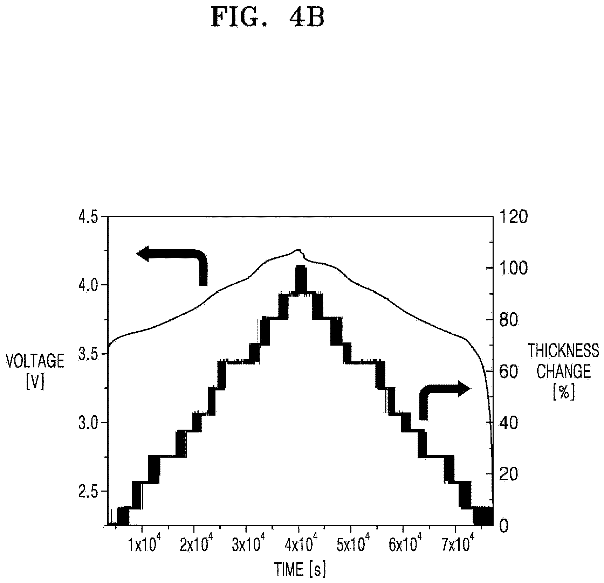

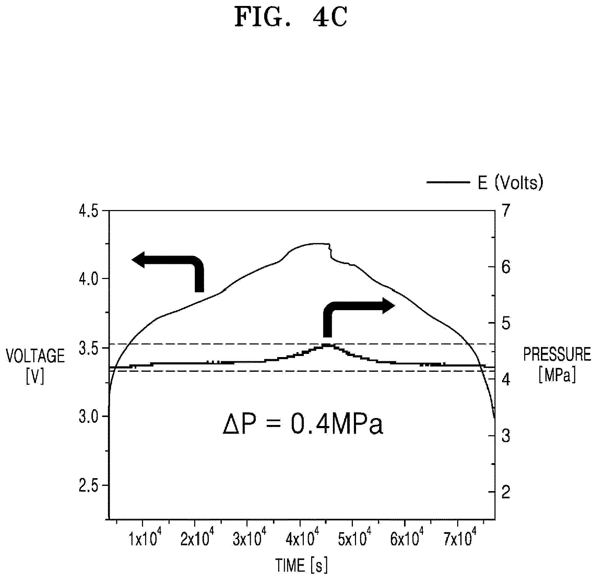

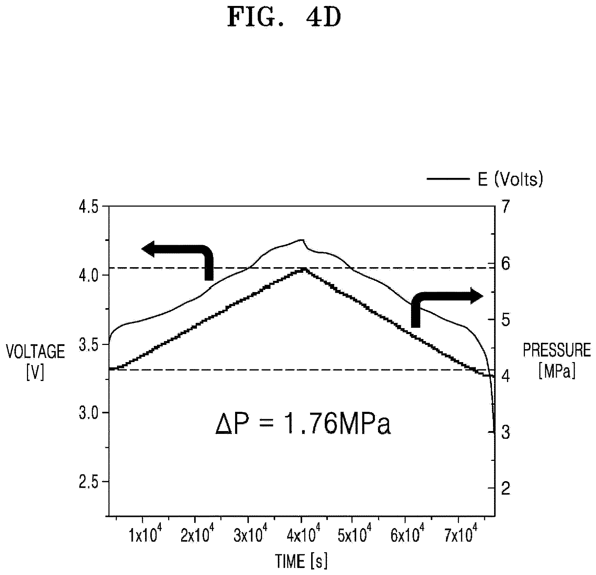

The all-solid secondary batteries of Example 1 and Comparative Example 1 were each charged with a charging current of 0.1 C at 25 °C to an end-of-charge voltage of 4.25 V and then was discharged with a discharging current of 0.1 C to an end voltage of 2.5 V. After this charge-discharge test, changes in cell thickness were investigated and are shown in FIGS. 4A and 4B, and pressure changes were also investigated and shown in FIGS. 4C and 4D. FIG. 4A and FIG. 4C show changes in cell thickness and pressure in the all-solid secondary battery of Example 1. FIG. 4B and FIG. 4D show changes in cell thickness and pressure in the all-solid secondary battery of Comparative Example 1.

The all-solid secondary battery of Example 1 as shown in FIG. 4A had an amount of thickness change of about 19%, and had an amount of internal stress change of 0.4 MPa as shown in FIG. 4C. Due to this precipitation into the MIEC structure during charging and discharging, changes in thickness and internal stress were remarkably reduced and the anode operation was possible without inducing a stress. By this minimization of internal stress change, it was possible to improve cell lifespan characteristics and ensure improved operating characteristics.

It was found that the all-solid secondary battery of Example 1 has a reduced cell thickness change and internal stress change compared to the all-solid secondary battery of Comparative Example 1 depicted in FIG. 4B and FIG. 4D. The all-solid secondary battery of Comparative Example 1 as shown in FIG. 4B has an amount of thickness change of about 100%, and has an amount of internal stress change of 1.76 MPa as shown in FIG. 4D.

Evaluation Example 4: Charge-Discharge Characteristics II

The all-solid secondary battery of Example 2 using an oxide-based solid electrolyte was evaluated as follows, to investigate charge-discharge profile characteristics.

The all-solid secondary battery was charged at a current of 0.1C in a constant current until the voltage reached 4.3 V (vs. Li), and then cut-off was performed at a current of 0.05C while maintaining 4.3 V in constant voltage mode. Subsequently, the discharge was performed at a constant current of 0.1C rate until the voltage reached 2.85V (vs. Li) (formation).

The all-solid secondary battery after the formation cycle was charged at 25 °C at a constant current of 0.1 C rate until the battery voltage reached 4.3 V (vs. Li). Subsequently, each battery was discharged at a constant current of 0.1 C rate until the battery voltage reached 2.85 V (vs. Li) during discharging. This cycle of charging and discharging was repeated 5 times. (1st to 5th cycles)

The all-solid battery after the 5thd cycle was charged at 25 °C at a constant current of 0.1 C rate until the battery voltage reached 4.3 V (vs. Li). Subsequently, each battery was discharged at a constant current of 0.2 C rate until the battery voltage reached 2.85 V (vs. Li) during discharging. This cycle of charging and discharging was repeated 10 times. (6th to 15th cycles)

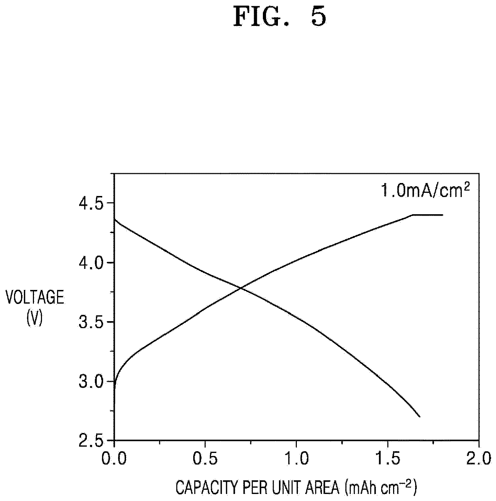

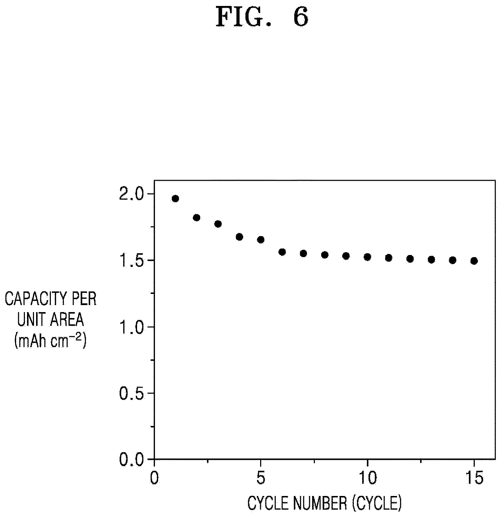

The all-solid secondary battery of Example 2 was evaluated for voltage change and capacity retention ratio according to specific capacity after charging and discharging, and the results of the evaluation are shown in FIGS. 5 and 6.

The all-solid secondary battery of Example 2, using an oxide-based solid electrolyte, showed normal charging and discharging as shown in FIG. 5, and exhibits excellent lifespan characteristics as shown in FIG. 6.

Although one or more embodiments have been described with reference to the drawings and examples, these embodiments are merely exemplary, and those skilled in the art shall understand that various modifications and equivalent other embodiments are possible therefrom. Accordingly, the scope of the present application shall be defined by the appended claims.

By using an anode-solid electrolyte sub-assembly for an all-solid secondary battery according to an embodiment, an all-solid secondary battery may be prepared which shows reduced changes in thickness due to electrodeposition/dissolution of lithium metal at anode upon charging and discharging, and as a result has improved high-rate characteristics, energy density, and lifespan characteristics.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the scope as defined by the following claims.

**Claims**

1. An anode-solid electrolyte sub-assembly for an all-solid secondary battery, the anode-solid electrolyte sub-assembly comprising:

   an anode current collector;
   a mixed ionic-electronic conductor structure disposed on a first side of the anode current collector, the mixed ionic-electronic conductor structure comprising a mixed ionic-electronic conductor, and having a plurality of openings extending along a thickness direction,
   wherein the plurality of openings has a structure in which at least one end is open;
   an interlayer disposed on the mixed ionic-electronic conductor structure and opposite the anode current collector; and
   a solid electrolyte disposed on the interlayer and opposite the mixed ionic-electronic conductor structure,
   wherein the interlayer comprises an interlayer material, the interlayer material comprising

   a carbon anode active material,
   lithium,
   a mixture of

   the carbon anode active material, and
   a second metal, a metalloid, or a combination thereof,

   a composite of

   the carbon anode active material, and
   the second metal, the metalloid, or a combination thereof, or

   a combination thereof.

2. The anode-solid electrolyte sub-assembly of claim 1,

   wherein the plurality of openings having the structure in which at least one end is open comprises a plurality of open pores providing an empty space; and/or
   wherein the plurality of openings having the structure in which at least one end is open has a shape comprising a vertical tube shape extending along the thickness direction; and/or
   wherein at least a portion of the openings comprises the interlayer material.

3. The anode-solid electrolyte sub-assembly of claims 1 or 2,

   wherein the mixed ionic-electronic conductor structure has a porosity of 60 percent or greater,
   the mixed ionic-electronic conductor structure has an average pore size of 5 nanometers to 200 nanometers, and
   the mixed ionic-electronic conductor structure has a thickness of 1 micrometer to 100 micrometers.

4. The anode-solid electrolyte sub-assembly of any of claims 1-3,

   wherein the mixed ionic-electronic conductor comprises,
   a carbon material, silicon, aluminum, titanium nitride, titanium carbide, tantalum nitride, tungsten nitride, iron nitride, nickel, niobium oxynitride, or a combination thereof,
   a lithiated compound of the carbon material, silicon, aluminum, titanium nitride, titanium carbide, tantalum nitride, tungsten nitride, iron nitride, nickel, niobium oxynitride, or a combination thereof, or
   a combination thereof.

5. The anode-solid electrolyte sub-assembly of any of claims 1-4,

wherein the mixed ionic-electronic conductor comprises

a material comprising TiN, TiC, TasNs, $Fe_xN$ wherein $2 \leq x \leq 4$, $W_2N$, $Nb_aO_xN_y$ wherein $0 \leq a \leq 2$, $0 \leq x \leq 2$, and $0 \leq y \leq 2$, or a combination thereof,
a lithiated compound of the material,
a mixture of the material and a carbon material,
a composite of the material and the carbon material, or
a combination thereof.

6. The anode-solid electrolyte sub-assembly of any of claims 1-5,

wherein the carbon anode active material comprises an amorphous carbon,
wherein the amorphous carbon is carbon black, acetylene black, furnace black, Ketjen black, graphene, carbon nanotube, carbon nanofiber, or a combination thereof.

7. The anode-solid electrolyte sub-assembly of any of claims 1-6,
wherein the second metal, the metalloid, or a combination thereof, is tin, indium, silicon, gallium, aluminum, titanium, zirconium, niobium, germanium, antimony, bismuth, zinc, gold, platinum, palladium, nickel, iron, cobalt, chromium, magnesium, cesium, cerium, molybdenum, silver, sodium, potassium, calcium, yttrium, tantalum, hafnium, barium, vanadium, strontium, tellurium, lanthanum, or a combination thereof.

8. The anode-solid electrolyte sub-assembly of any of claims 2-7,

wherein the plurality of open pores comprises a first metal material,
wherein the first metal material is lithium, a lithium-first metal alloy, or a combination thereof;
preferably wherein the first metal is tin, indium, silicon, gallium, aluminum, titanium, zirconium, niobium, germanium, antimony, bismuth, zinc, gold, platinum, palladium, nickel, iron, cobalt, chromium, magnesium, cesium, cerium, molybdenum, silver, sodium, potassium, calcium, yttrium, tantalum, hafnium, barium, vanadium, strontium, tellurium, lanthanum, or a combination thereof.

9. The anode-solid electrolyte sub-assembly of any of claims 1-8, further comprising a first metal film between the mixed ionic-electronic conductor structure and the interlayer; and/or
wherein the interlayer has an average pore size of 0.1 nanometer to 100 nanometers.

10. The anode-solid electrolyte sub-assembly of any of claims 1-9,
wherein the plurality of open pores of the mixed ionic-electronic conductor structure has an average pore size, which is greater than an average pore size of the interlayer.

11. The anode-solid electrolyte sub-assembly of any of claims 1-10,

wherein the mixed ionic-electronic conductor structure comprises vertical nanotubes extending along the thickness direction,
wherein the vertical nanotubes have an average diameter of 5 nanometers to 200 nanometers, and the vertical nanotubes have an average length of 1 micrometer to 100 micrometers.

12. An all-solid secondary battery comprising:

a cathode; and
the anode-solid electrolyte sub-assembly of any of claims 1-11 disposed on the cathode,
wherein the solid electrolyte is disposed between the cathode and the anode;
preferably wherein the solid electrolyte comprises an oxide solid electrolyte, a sulfide solid electrolyte, a polymer electrolyte, or a combination thereof.

13. A method of preparing the all-solid secondary battery of claim 12, the method comprising:

providing a mixed ionic-electronic conductor structure, the mixed ionic-electronic conductor structure comprising a mixed ionic-electronic conductor, and having a plurality of openings extending along a thickness direction, wherein the plurality of openings has a structure in which at least one end is open;

disposing an interlayer on the mixed ionic-electronic conductor structure to prepare the mixed ionic-electronic conductor structure with the interlayer disposed thereon;

disposing the mixed ionic-electronic conductor structure with the interlayer disposed thereon on an anode current collector to prepare a laminate,

wherein the mixed ionic-electronic conductor structure is between the interlayer and the anode current collector;

disposing the solid electrolyte on the interlayer of the laminate and opposite the mixed ionic-electronic conductor structure to form an anode-solid electrolyte sub-assembly; and

disposing a cathode on the solid electrolyte of the anode-solid electrolyte sub-assembly and opposite the anode to prepare the all-solid secondary battery.

**14.** The method of claim 13,

wherein the disposing of the interlayer on the mixed ionic-electronic conductor structure to prepare the mixed ionic-electronic conductor structure with the interlayer disposed thereon comprises a transfer method or a coating method.

**15.** The method of claims 13 or 14, further comprising further disposing a first metal film between the mixed ionic-electronic conductor structure and the interlayer.

# FIG. 1A

# FIG. 1B

# FIG. 1C

FIG. 1D

30

23

23a

25'

22

24

21

# FIG. 1E

# FIG. 2A

EP 4 386 891 A1

# FIG. 2B

35

# FIG. 3A

# FIG. 3B

FIG. 3C

FIG. 3D

# FIG. 4A

# FIG. 4B

# FIG. 4C

# FIG. 4D

# FIG. 5

# FIG. 6

FIG. 7A

X 30,000    10.0kV SEI    SEM    100nm YONSEI    WD 7.9mm

## FIG. 7B

Europäisches
Patentamt

European
Patent Office

Office européen
des brevets

# EUROPEAN SEARCH REPORT

**Application Number**

EP 23 21 1937

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/014058 A1 (DE SOUZA JOEL P [US] ET AL) 9 January 2020 (2020-01-09)<br><br>* paragraphs [0047], [0074], [0075], [0081], [0088] *<br>* figure 1 * | 1,2,4, 6-10, 12-14 | INV.<br>H01M4/133<br>H01M4/134<br>H01M4/38<br>H01M4/587<br>H01M10/052<br>H01M10/0525 |
| X | WO 2021/260175 A1 (ACCUMULATEURS FIXES [FR]) 30 December 2021 (2021-12-30)<br>* claims 1, 11 *<br>* figure 2 *<br>* paragraphs [0067], [0120] – [0125] *<br>& US 2023/343930 A1 (JORDY CHRISTIAN [FR] ET AL) 26 October 2023 (2023-10-26) | 1-6,9, 11,12,15 | H01M10/0562<br>H01M10/42<br>H01M4/36 |
| A | US 2020/328423 A1 (LI JU [US] ET AL) 15 October 2020 (2020-10-15)<br>* claims 1, 15 *<br>* figures 1, 45A, 48A, 49A *<br>* paragraphs [0134], [0156], [0163], [0171], [0173] * | 1-15 | |
| | | | TECHNICAL FIELDS SEARCHED (IPC)<br><br>H01M |

The present search report has been drawn up for all claims

| Place of search | Date of completion of the search | Examiner |
|---|---|---|
| Munich | 7 May 2024 | Gregori, Giuliano |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 21 1937

This annex lists the patent family members relating to the patent documents cited in the above-mentioned European search report.
The members are as contained in the European Patent Office EDP file on
The European Patent Office is in no way liable for these particulars which are merely given for the purpose of information.

07-05-2024

| Patent document cited in search report | | Publication date | Patent family member(s) | | | Publication date |
|---|---|---|---|---|---|---|
| US 2020014058 | A1 | 09-01-2020 | NONE | | | |
| WO 2021260175 | A1 | 30-12-2021 | CN | 115803906 | A | 14-03-2023 |
| | | | EP | 4173059 | A1 | 03-05-2023 |
| | | | FR | 3112032 | A1 | 31-12-2021 |
| | | | US | 2023343930 | A1 | 26-10-2023 |
| | | | WO | 2021260175 | A1 | 30-12-2021 |
| US 2020328423 | A1 | 15-10-2020 | US | 2020328423 | A1 | 15-10-2020 |
| | | | WO | 2020061565 | A1 | 26-03-2020 |

EPO FORM P0459

For more details about this annex : see Official Journal of the European Patent Office, No. 12/82